# EUROPÄISCHE PATENTSCHRIFT

(11) **EP 3 244 724 B1**
(45) Veröffentlichungstag und Bekanntmachung des Hinweises auf die Patenterteilung: **14.06.2023**
(21) Anmeldenummer: 15805293.6
(22) Anmeldetag: 20.11.2015
(51) Int. Cl.: A01G 9/02

(54) **SAAT- UND/ODER PFLANZSYSTEM**
SEED AND/OR PLANT SYSTEM
SYSTÈME À GRAINES ET/OU À PLANTES

(30) Priorität: 14.01.2015 DE 202015100160 U
(43) Veröffentlichungstag der Anmeldung: 22.11.2017
(73) Patentinhaber: B+M Textil GmbH & Co. KG, 09465 Sehmatal-Cranzahl (DE); Weisel, Niklas Andreas Wilm, 09456 Annaberg-Buchholz (DE)
(72) Erfinder: WEISEL, Niklas Andreas Wilm, 09456 Annaberg-Buchholz (DE)
(74) Vertreter: Steiniger, Carmen
(86) Internationale Anmeldenummer: PCT/IB2015/059010
(87) Internationale Veröffentlichungsnummer: WO 2016/113609

(56) Entgegenhaltungen:
- DE-A1- 3 804 356
- DE-U1-202013 104 576

## Beschreibung

Die vorliegende Erfindung betrifft ein Saat- und/oder Pflanzsystem, das wenigstens einen an einer Halterung hängend befestigten strangförmigen Saat- und/oder Pflanzenträger aufweist, wobei der Saat- und/oder Pflanzenträger mehrere voneinander, in seiner Längsausdehnung beabstandete Saat- und/oder Pflanzstellen mit Samen und/oder wenigstens einer Pflanze aufweist, wobei der Samen und/oder die wenigstens eine Pflanze über wenigstens ein Versorgungsrohr oder wenigstens eine Versorgungsrinne mit einer Flüssigkeit versorgt wird/werden.

Begrünungssysteme zum Begrünen von Fassaden oder Dächern dienen nicht nur der Verschönerung von Objekten, sondern verbessern auch die Luft, indem sie Schadstoffe abbauen und Sauerstoff produzieren. Darüber hinaus können sie auch als Schallschutz Anwendung finden. Um beim Begrünen Krüppel- und Kleinwüchs zu vermeiden, ist es jedoch von großer Bedeutung, einen einer Pflanzsorte entsprechenden Abstand zwischen einzelnen Samenkörnern und/oder Jungpflanzen einzuhalten. Durch einen der Pflanzensorte optimal angepassten Abstand zwischen den einzelnen Samenkörnen bzw. den Jungpflanzen wird die Pflanze in ihrem Wachstum nicht behindert und ein späteres Deformieren der Pflanzen kann vermieden werden.

In der Druckschrift DE 89 11 056 U1 ist eine Samenmatte aus mindestens zwei aus Naturfaser bestehenden Vlieslagen beschrieben, wobei zwischen den Vlieslagen eine Verstärkungsbahn angeordnet ist, auf welche Saatgut aufgestreut ist. Nachteiligerweise entsteht jedoch durch das Aufstreuen des Saatgutes auf die Verstärkungsbahn eine unregelmäßige Saatgutverteilung. Die Vlieslagen und die eingeschlossene Verstärkungsbahn sind miteinander vernadelt, sodass das Saatgut auf seiner Einlegeposition fixiert wird. Aufgrund der Festigkeit der Samenmatte eignet sich diese beispielsweise zum Begrünen von Hanglagen. Ferner besteht die Möglichkeit, die Samenmatte örtlich zu befestigen, damit deren Abrutschen vermieden werden kann.

Die Druckschrift DE 20 2009 014 675 U1 beinhaltet eine Pflanzplatte zur Fassadenbegrünung, wobei die Pflanzplatte wie eine Schieferschindel an der Fassade befestigt ist. Die Pflanzplatte umfasst eine Kunststoffplatte, auf welcher ein mit Saatgut versehener Substratträger aufgebracht ist, wobei der Substratträger in erster Linie dazu dient, Wurzeln von Pflanzen und Wasser zu halten.

Ein Vertikalbegrünungssystem ist in der Druckschrift DE 20 2012 104 884 U1 offenbart. Das Vertikalbegrünungssystem weist eine Trägerplatte auf, welche an tragenden Wänden befestigt ist. Zum Abdecken der Trägerplatte ist ein Abdeckvlies vorgesehen, welches derart gefaltet sein kann, dass es taschenähnliche Formen ausbildet. In diese Pflanzentaschen ist ein wasserspeicherndes Substrat eingebracht, welches zusammen mit dem Vlies ein wurzelbares Medium für Pflanzen bildet. Zum Bewässern der Pflanzen ist unterhalb der Trägerplatte des Vertikalbegrünungssystems eine als Wasserleitprofil ausgebildete Rinne vorgesehen. In einer weiteren Ausführungsform kann das Vertikalbegrünungssystem auch einen aus dem Wasserleitprofil ausgebildeten Rahmen aufweisen.

Die Druckschrift DE 10 2010 045 666 B4 beinhaltet ein Begrünungssystem zur Begrünung von vertikalen und geneigten Flächen. Das Begrünungssystem besitzt eine Vegetationstragschicht sowie eine Bewässerungsstruktur, welche derart angeordnet sind, dass ein Wasser- und/oder Nährstofftransport zwischen der Vegetationstragschicht und der Bewässerungsstruktur stattfindet. Ferner kann vor der Vegetationstragschicht auch noch eine diese überdeckende, mehrere Auswuchslöcher aufweisende Abdeck- und Rückhalteschicht angeordnet sein.

In der Druckschrift DE 38 04 356 A1 ist eine Vorrichtung zum hängenden Begrünen von Gebäudeteilen beschrieben. Die Vorrichtung weist mindestens einen Schlauch auf, auf dem mehrere voneinander beabstandete Pflanzballen aufgezogen sind. Die Pflanzballen bestehen aus einem Torf- oder Erdegemisch, das unter Zugabe eines Bindemittels, wie beispielsweise Lehm, zusammenhält. Zur Bewässerung der Pflanzballen sind im Bereich der Pflanzballen Bohrungen in dem Schlauch eingebracht. Umgeben werden die Pflanzballen von einem Netzschlauch, der die Pflanzballen in ihrer Position hält.

Die Druckschrift DE 20 2013 104 576 U1 beschreibt ein Begrünungs- oder Bepflanzungssystem, welches wenigstens ein Saatband aufweist. Das Saatband weist im Abstand voneinander in einem Hüllschlauch eingebettetes Saatgut auf. Der Hüllschlauch ist als Schlauchtextil ausgebildet, welches das Saatgut gedehnt umschließt und zwischen den Saatgutpositionen ungedehnt ist.

Aufgabe der vorliegenden Erfindung ist es, ein Saat- und/oder Pflanzsystem der oben angegebenen Gattung bereitzustellen, bei dem die Saat- und/oder Pflanzstellen auf einfache und kostengünstige Weise im beispielsweise durch den Hersteller des Saat- und/oder Pflanzsystems definierbaren Abstand vorgesehen werden können.

Die Aufgabe wird in einer ersten Ausführungsform der Erfindung durch ein Saat- und/oder Pflanzsystem der oben genannten Gattung gelöst, bei welchem an den Saat- und/oder Pflanzstellen jeweils eine Hülse vorgesehen ist, von der ein Substrat mit dem Samen und/oder der Pflanze aufgenommen oder aufnehmbar ist, wobei die Hülse aus dem oder um den Saat- und/oder Pflanzenträger ausgebildet ist, quer zu der Längsausdehnung des Saat- und/oder Pflanzenträgers ausgerichtet ist und ein thermogeformter oder tiefgezogener Bereich des Saat- und/oder Pflanzenträgers die Hülse ausbildet, wobei ein Bodenbereich des thermogeformten oder tiefgezogenen Bereiches wenigstens eine Öffnung aufweist.

Die Aufgabe wird in einer zweiten Ausführungsform der Erfindung durch ein Saat- und/oder Pflanzsystem der oben genannten Gattung gelöst, bei welchem an den Saat- und/oder Pflanzstellen jeweils eine Hülse vorgesehen ist, von der ein Substrat mit dem Samen und/oder der Pflanze aufgenommen oder aufnehmbar ist und/oder die zumindest teilweise ein Substrat für den Samen und/oder die Pflanze ausbildet, wobei die Hülse um den Saat- und/oder Pflanzenträger ausgebildet ist, wobei die Hülse an dem Saat- und/oder Pflanzenträger klemmt und/oder an dem Saat- und/oder Pflanzenträger mit wenigstens einem Befestigungselement fixiert ist, wobei das Befestigungselement eine Schelle oder ein C-Ring ist.

Durch die wenigstens eine Hülse, an der jeweils eine Saat- und/oder Pflanzstelle vorgesehen ist, ist die Position der jeweiligen Saat- und/oder Pflanzstelle als auch der Abstand der einzelnen Saat- und/oder Pflanzstellen des erfindungsgemäßen Saat- und/oder Pflanzsystems voneinander klar definierbar. Dabei kann bei der ersten Ausführungsform der vorliegenden Erfindung die Hülse direkt aus dem Material des Saat- und/oder Pflanzenträgers gefertigt sein. Hierbei kann die Hülse beispielsweise durch eine Vertiefung in dem Saat- und/oder Pflanzenträger ausgeformt sein. Dabei hat es sich als besonders vorteilhaft erwiesen, wenn der Saat- und/oder Pflanzenträger bandförmig ausgebildet ist. In anderen, ebenfalls vorteilhaften Ausführungsformen der vorliegenden Erfindung kann der Saat- und/oder Pflanzenträger jedoch auch in Form einer Kordel, eines Seils, einer Strickleiter oder eines Schlauches ausgebildet sein.

In der zweiten Ausführungsform der vorliegenden Erfindung kann die Hülse jedoch auch ring- oder klemmenförmig als separate Vorrichtungskomponente um den Saat- und/oder Pflanzenträger ausgebildet sein, in welchem Fall sie aus dem gleichen Material wie der Saat- und/oder Pflanzenträger oder auch aus wenigstens einem anderen Material ausgebildet sein kann.

Bei der vorliegenden Erfindung kann das Substrat für den Samen und/oder die Pflanze, der bzw. die an der jeweiligen Saat- und/oder Pflanzstelle vorgesehen werden soll, innerhalb der Hülse vorgesehen sein bzw. werden, also die Hülse das Substrat zumindest teilweise umhüllen. Diese Variante der vorliegenden Erfindung ermöglicht es, den Samen und/oder die Pflanzen erst dann in die Hülse einzubringen, wenn der Saat- und/oder Pflanzenträger mit den Hülsen bereits hängt. Ferner kann bei diesem Ausführungsbeispiel leicht beispielsweise eine welkende oder abgestorbene Pflanze aus einer Hülse entfernt und durch die Hülse bzw. das von der Hülse umgebene Substrat mit neuem Samen und/oder einer neuen Pflanze bestückt werden.

Bei der zweiten Ausführungsform der Erfindung ist es jedoch auch möglich, dass das Material der Hülse zumindest teilweise selbst das Substrat für den Samen und/oder die Pflanze ausbildet. Somit bildet die Hülse, die das Substrat aufnimmt und/oder selbst das Substrat für den Samen und/oder die Pflanze ausbildet, eine ideale Grundlage für das Wachstum der sich aus dem Samen ausbildenden Pflanzen bzw. für die bereits durch die Hülse aufgenommene Pflanze. Die derart aus dem Saat- und/oder Pflanzenträger ausgebildete Hülse kann ein Substrat aufnehmen, welches entweder die Samen und/oder Pflanzen beim Einsetzen in die Hülse bereits aufweist oder in welches die Samen oder Pflanzen erst nach dem Einsetzen des Substrates in die Hülse eingebracht werden. Das Substrat bietet den Samen und Pflanzen einen optimalen Nährboden und fördert zudem die Wurzelbildung der wenigstens einen Pflanze.

Bevorzugt sind die Samen und/oder Pflanzen beim Anbringen der Hülse um den Saat- und/oder Pflanzenträger bereits in das Substrat eingebracht, da damit Herstellungs- und Montageaufwand reduziert werden können. Ebenso ist es aber auch möglich, dass die Samen und/oder Pflanzen erst nach dem Befestigen des Substrates an dem Saat- und/oder Pflanzenträger in das Substrat eingebracht, zum Beispiel eingedrückt, werden. Ferner ist es ebenso denkbar, dass die Samen und/oder Pflanzen nicht in das Substrat eingebracht werden, sondern außen an dem Substrat oder neben dem Substrat oder innerhalb wenigstens einer in dem Substrat vorgesehenen Kuhle vorgesehen werden.

Als besonders vorteilhaft hat es sich erwiesen, wenn die zumindest teilweise das Substrat ausbildende Hülse zylinderförmig ausgebildet ist. Die Hülse kann in anderen Ausführungsformen ebenso gut aber auch jede beliebige andere Form aufweisen. Ferner kann sich eine Ursprungsform der Hülse, zum Beispiel bedingt durch das Einbringen einer Pflanze in die Hülse und/oder durch das Pflanzenwachstum innerhalb der Hülse, verändern.

Bei dem erfindungsgemäßen Saat- und/oder Pflanzsystem weist der verwendete strangförmige Saat- und/oder Pflanzenträger mehrere, in der Längsausdehnung des Saat- und/oder Pflanzenträgers voneinander beabstandete Saat- und/oder Pflanzstellen auf, an denen jeweils das Saatgut bzw. der Samen und/oder wenigstens eine Pflanze vorgesehen werden kann. Der Abstand der Saat- und/oder Pflanzstellen zueinander kann dabei beispielsweise anhand der Pflanzensorte oder einer Länge des Saat- und/oder Pflanzenträgers gewählt werden. Entsprechend sind auch die Abmessungen des Saat- und/oder Pflanzenträgers sowie die Abmessungen und Ausgestaltungsformen der Saat- und/oder Pflanzstellen frei wählbar.

Zur optimalen Versorgung der Samen und/oder der wenigstens einen Pflanze werden diese erfindungsgemäß über wenigstens ein Versorgungsrohr oder wenigstens eine Versorgungsrinne mit einer Flüssigkeit versorgt. Unter Flüssigkeiten sind bei der vorliegenden Erfindung wässrige Medien, wie beispielsweise Wasser mit oder ohne darin enthaltene(n) Nährstoffe(n), Öle und/oder auch Gele zu verstehen. Die Flüssigkeit kann auch wenigstens ein Pestizid enthalten oder eine Kombination aus verschiedenen Substanzen sein.

In einer Ausführungsform der vorliegenden Erfindung kann das Versorgungsrohr oder die Versorgungsrinne derart angeordnet sein, dass diese(s) direkt über dem Saat- und/oder Pflanzenträger vorgesehen ist, sodass die Flüssigkeit durch eine an dem Versorgungsrohr oder der Versorgungsrinne vorgesehene Öffnung auf den Saat- und/oder Pflanzenträger fließen oder tropfen kann.

Grundsätzlich ist es jedoch auch denkbar, dass der wenigstens eine Saat- und/oder Pflanzenträger lediglich in einer Umgebung des Versorgungsrohres oder der Versorgungsrinne angeordnet ist und durch wenigstens ein an dem Versorgungsrohr- oder der Versorgungsrinne angebrachtes oder von dem Versorgungsrohr oder der Versorgungsrinne ausgehendes und zur Flüssigkeitsführung geeignetes Kanalelement, wie eine Rinne, ein Rohr oder einen Schlauch, mit der Flüssigkeit versorgt wird. So ist es beispielsweise möglich, dass der Saat- und/oder Pflanzenträger seitlich einer Öffnung des Versorgungsrohres oder Versorgungsrinne hängend befestigt sein kann und oder mehrere, seitlich einer Öffnung des Versorgungsrohres oder Versorgungsrinne hängend befestigte Saat- und/oder Pflanzenträger durch dieselbe Öffnung mit der Flüssigkeit versorgt werden können. Dabei kann der Saat- und/oder Pflanzenträger derart in der Umgebung des Versorgungsrohres oder der Versorgungsrinne angeordnet sein, dass die Flüssigkeit auf den von dem Versorgungsrohr oder der Versorgungsrinne beabstandet angebrachten wenigstens einen Saat- und/oder Pflanzenträger fließen oder tropfen kann.

Der von dem Saat- und/oder Pflanzsystem umfasste, hängend befestigte strangförmige Saat- und/oder Pflanzenträger ist bei der vorliegenden Erfindung an einer Halterung angebracht, welche aus allen erdenklichen Formen ausgebildet sein kann und an allen vorstellbaren Plätzen vorgesehen sein kann. So kann die Halterung beispielsweise als einfacher Haken ausgebildet sein, welcher zum Beispiel an einer Gardinenstange, einer Decke oder einem Dach befestigt sein kann. Ferner kann die Halterung auch wenigstens eine Stange oder wenigstens ein Längsprofil aufweisen, in der oder dem wenigstens ein Loch vorgesehen ist, durch das der strangförmige Saat- und/oder Pflanzenträger geführt sein kann und/oder an dem der Saat- und/oder Pflanzenträger mittels wenigstens einem, in den Saat- und/oder Pflanzenträger eingebrachten Knotens gehalten werden kann. Überdies kann der strangförmige Saat- und/oder Pflanzenträger auch einfach um einen beliebigen Gegenstand gewickelt sein und mittels eines Knotens oder eines anderen Befestigungselementes, wie beispielsweise einer Schelle, oder eines Klebemittels an dem Gegenstand gehalten werden.

Das erfindungsgemäße Saat- und/oder Pflanzsystem kann an den unterschiedlichsten Orten Anwendung finden. So kann dieses beispielsweise an Hausfassaden, Dächern, Brücken, Lärmschutzwänden oder dergleichen angebracht werden. Zudem kann das erfindungsgemäße Saat- und/oder Pflanzsystem aber auch freistehend ausgebildet sein, sodass es zum Beispiel als Raumteiler oder als Blickschutz auf Balkons oder in Innenhöfen Anwendung finden kann. Zudem kann das erfindungsgemäße Saat- und/oder Pflanzsystem bei einer Ausstattung mit Unterwasserpflanzen auch in Meeresaquarien, Klärbecken oder ähnlichem Einsatz finden.

Bei der ersten Ausführungsform ist die wenigstens eine Hülse quer oder längs zu der Längsausdehnung des Saat- und/oder Pflanzenträgers ausgerichtet. Mit der Ausrichtung der Hülse ist hier die Ausrichtung einer Längs- oder Innenmittelachse der Hülse, wie beispielsweise einer Rotationsachse einer zylindrischen Hülse, gemeint. So ist vorteilhafterweise beim Anbringen der Hülse um den Saat- und/oder Pflanzenträger die Längsachse der Hülse parallel zur Längsausdehnung des Saat- und/oder Pflanzenträgers ausgerichtet, wodurch die Hülse beispielsweise durch axiales Aufschieben auf den Saat- und/oder Pflanzenträger oder durch schellenähnliches Umklemmen des Saat- und/oder Pflanzenträgers einfach an diesem vorgesehen und befestigt werden kann. Wird die Hülse durch eine Vertiefung in dem Saat- und/oder Pflanzenband ausgebildet, wird diese Vertiefung quer zur Längsausdehnung des Saat- und/oder Pflanzenträgers erzeugt.

In der ersten Ausführungsform der vorliegenden Erfindung bildet ein thermogeformter oder tiefgezogener Bereich des Saat- und/oder Pflanzenträgers die Hülse aus, wobei ein Bodenbereich des thermogeformten oder tiefgezogenen Bereiches wenigstens eine Öffnung aufweist. Das Thermoformen oder Tiefziehen eignet sich besonders zur Herstellung der Hülse, da sich mit diesen Verfahren hülsenartige Strukturen aus einem vorher flachen Ausgangsmaterial einfach und kostengünstig fertigen lassen. Die Verfahren können sowohl in der Massenfertigung als auch in der Kleinserienfertigung Anwendung finden. Zudem ist ein wesentlicher Vorteil des Tiefziehens, dass trotz des Umformprozesses die Materialdicke des tiefgezogenen Materials im Wesentlichen unverändert bleibt.

Die wenigstens eine Öffnung kann beispielsweise mittels Ausstanzen des Bodenbereiches der thermogeformten oder tiefgezogenen Hülse erzeugt werden. Über diese wenigstens eine Öffnung können der Samen und/oder die Pflanze optimal mit der Flüssigkeit versorgt werden, auch wenn das Hülsenmaterial selbst flüssigkeitsabweisend ist. Die Flüssigkeit kann durch die wenigstens eine Öffnung einfach in ein Hülseninneres eindringen und die dort vorgesehenen Samen und/oder Pflanzen mit der Flüssigkeit versorgen. Ferner können sich die Wurzeln der Pflanzen durch die wenigstens eine Öffnung erstrecken und dadurch einfach mit der Flüssigkeit versorgt werden.

In einer zweckmäßigen Ausgestaltung der ersten Ausführungsform des erfindungsgemäßen Saat- und/oder Pflanzensystems ist der Saat- und/oder Pflanzenträger aus extrudiertem Kunststoff und/oder wenigstens einer Blechbahn und/oder wenigstens einem Textilband oder aus einem Verbund aus wenigstens zwei der genannten Materialien ausgebildet. Ist der Saat- und/oder Pflanzenträger aus extrudiertem Kunststoff ausgebildet, kann dessen Material besonders vorteilhaft genutzt werden, um daraus, wie oben erwähnt, beispielsweise durch Thermoformen wenigstens eine Hülse des Saat- und Pflanzenträgers auszubilden. Bei einer Ausbildung des Saat- und/oder Pflanzenträgers aus einer Blechbahn kann das Tiefziehen verwendet werden, um aus der Blechbahn wenigstens eine Hülse des Saat- und/oder Pflanzenträgers auszubilden.

In der zweiten Ausführungsform der Erfindung kann das Saat- und/oder Pflanzsystem aus einem Textilband oder einem Seil, einer Schnur, einer Kordel, einem Strick, einer Kette oder einem Schlauch ausgebildet sein. Bei einer Verwendung eines Textilbandes als Saat- und/oder Pflanzenträger, kann die wenigstens eine Hülse beispielsweise durch Dehnen des Textilbandes ausgebildet werden. Eine Ausbildung des Saat- und/oder Pflanzenträgers aus Textilband ist auch dann von besonderem Vorteil, wenn die Hülse nicht aus dem Saat- und/oder Pflanzenträger ausgebildet ist, sondern um den Saat- und/oder Pflanzenträger.

Somit lassen sich durch einfache und kostengünstig realisierbare Verfahrensschritte Hülsen mit weitgehend variabler und definierbarer Größe und Form und hoher Haltbarkeit ausbilden.

In der zweiten Ausführungsform des erfindungsgemäßen Saat- und/oder Pflanzsystems klemmt die Hülse an dem Saat- und/oder Pflanzenträger und/oder ist an dem Saat- und/oder Pflanzenträger mit wenigstens einem Befestigungselement fixiert. Zum Klemmen der Hülse an den Saat- und/oder Pflanzenträger weist die Hülse vorzugsweise eine Öffnung oder einen Spalt auf, an der oder dem die Hülse auf den Saat- und/oder Pflanzenträger aufgebracht werden kann. Dabei ist das Material der Hülse vorzugsweise so flexibel, dass sich die Öffnung oder der Spalt für das Aufbringen auf den Saat- und/oder Pflanzenträger weiten bzw. dehnen lässt und nach dem Anbringen derart zusammenzieht, dass die Hülse stabil an einer ausgewählten Position des Saat- und/oder Pflanzenträgers klemmt.

Zum Fixieren der Hülse an dem Saat- und/oder Pflanzenträger ist es zudem möglich, wenigstens ein Befestigungselement an der oder um die Hülse vorzusehen. Besonders bevorzugt ist es, wenn das Befestigungselement wenigstens eine Schelle oder wenigstens ein C-Ring ist, da mit diesen Befestigungselementen die Hülse gut fixiert werden kann, diese einfach anzubringen sind und eine hohe Stabilität aufweisen. In anderen Ausführungsformen kann das Befestigungselement beispielsweise aber auch wenigstens ein Faden, ein Seil, ein Band, ein Tuch und/oder ein ähnliches, zur Befestigung geeignetes Element sein.

In einer optionalen Ausgestaltungsvariante weist das Befestigungselement Samen auf. Da aus den Samen Pflanzen entstehen, kann durch diese Ausführungsform der Erfindung dafür gesorgt werden, dass nach geraumer Zeit auch aus dem, an dem oder um das Befestigungselement wenigstens eine Pflanze wächst, die das Befestigungselement verdeckt, wodurch Lücken in der Begründung verhindert werden können.

Als besonders vorteilhaft hat es sich zudem erwiesen, wenn das Substrat Steinwolle und/oder eine mineralische, künstliche oder natürliche textilfaserartige und/oder wenigstens eine offenporige organische oder anorganische Schaumstruktur aufweist. Steinwolle, textile Fasern und offenporige Schaumstoffstrukturen bieten sich als Saat- und/oder Pflanzsubstrat(e) bei der vorliegenden Erfindung besonders an, da solche Materialien durch ihre Offenporigkeit viel Flüssigkeit aufnehmen und speichern können und sich zudem die Wurzeln von Pflanzen in den offenporigen Materialien gut ausbreiten können. In anderen Ausgestaltungsvarianten können jedoch auch andere Materialien als Substrat verwendet werden.

In einer weiteren favorisierten Ausbildung des erfindungsgemäßen Saat- und/oder Pflanzsystems ist parallel zu dem Saat- und/oder Pflanzenträger ein Versorgungsstrang an dem Versorgungsrohr oder der Versorgungsrinne befestigt, wobei der Versorgungsstrang in flüssigkeitsleitendem Kontakt mit dem Saat- und/oder Pflanzenträger ist. Durch die Kontaktierung des Versorgungsstranges mit dem Saat- und/oder Pflanzenträger wird die aus dem Versorgungsrohr oder der Versorgungsrinne auf den Versorgungsstrang aufgebrachte oder in diesen geleitete Flüssigkeit an den Saat- und/oder Pflanzenträger abgegeben. Die Kontaktierung kann dabei kontinuierlich oder intervallweise erfolgen. Der Versorgungsstrang kann dabei ähnlich wie der Saat- und/oder Pflanzenträger hängend an der Halterung befestigt sein. Zudem kann der Versorgungsstrang hinsichtlich seines Materials und seiner Länge und Form und seiner Beweglichkeit so gestaltet sein, dass er sich an den Saat- und/oder Pflanzenträger optisch anpasst, sodass er nach erfolgter Begrünung kaum mehr als separate Komponente des Saat- und/oder Pflanzsystems wahrgenommen wird.

Besonders vorteilhaft ist es insbesondere bei der Ausgestaltungsvariante der Erfindung, bei der der Samen und/oder die Pflanze in einen thermogeformten oder tiefgezogenen Bereich des Saat- und/oder Pflanzenträgers mit wenigstens einer Öffnung im Bodenbereich des thermogeformten oder tiefgezogenen Bereiches eingesetzt ist, wenn der Versorgungsstrang derart angeordnet ist, dass dieser das Substrat, die Samen und/oder die Wurzeln der Pflanze(n) im Bereich der wenigstens eine Öffnung berührt. So können die Wurzeln der Pflanzen und/oder die Samen direkt über den Versorgungsstrang mit Flüssigkeit versorgt werden und dennoch das Hülsenmaterial selbst aus einem flüssigkeitsabweisenden Material ausgebildet werden.

In der Ausgestaltungsvariante, in welcher die Hülse mit dem Samen und/oder der Pflanze um den Saat- und/oder Pflanzenträger angeordnet ist, ist der Versorgungsstrang vorzugsweise derart angeordnet, dass der Versorgungsstrang die als Substrat ausgebildete Hülse kontaktiert oder kontaktieren kann.

Ferner hat es sich als günstig erwiesen, wenn das Saat- und/oder Pflanzsystem einen Arm, einen Schwenkarm, wenigstens eine Führung, einen Hebel oder eine Wippe zum Andrücken des wenigstens einen Versorgungsstranges an den wenigstens einen Saat- und/oder Pflanzenträger oder umgekehrt aufweist. Durch das Andrücken wird ein Kontakt zwischen dem Versorgungsstrang und dem Saat- und/oder Pflanzenträger hergestellt, wodurch letzterer mit der durch den Versorgungsstrang geleiteten Flüssigkeit versorgt werden kann. Das Andrücken des Versorgungsstranges mittels des Schwenkarmes, Hebels oder dergleichen ermöglicht es, dass je nach Bedarf dem Samen und/oder der Pflanze Flüssigkeit zugeführt werden kann.

Vorzugsweise ist eine Druckstelle des Armes, des Schwenkarmes, des Hebels oder der Wippe auf den Versorgungsstrang an einem oberen Ende des Versorgungsstranges vorgesehen, sodass der Versorgungsstrang den parallel befestigten Saat- und/oder Pflanzenträger möglichst weit oben kontaktieren kann. Die Kontaktierung des Saat- und/oder Pflanzenträgers am oberen Ende sorgt dafür, dass der Saat- und/oder Pflanzenträger über seine gesamte Länge hinweg ausreichend mit Flüssigkeit versorgt werden kann. In Abhängigkeit von der Größe und konstruktiven Bauweise des Saat- und/oder Pflanzsystems kann die Abmessung, Anordnung und konstruktive Ausgestaltung des Armes, Schwenkarmes, Hebels oder der Wippe variiert werden.

Der Versorgungsstrang kann zumindest teilweise auch durch den Saat- und/oder Pflanzenträger hindurchgeführt sein, wodurch die Flüssigkeit optimal an die an oder in dem Saat- und/oder Pflanzenträger vorgesehenen Saat- und/oder Pflanzstellen von innen nach außen abgegeben werden kann. Diese Variante besitzt zudem den Vorteil, dass hier der Versorgungsstrang vorteilhaft durch den Saat- und/oder Pflanzenträger bzw. die an oder aus den Pflanzstellen wachsenden Pflanzen verdeckt werden kann.

In verschiedenen Ausführungsformen der vorliegenden Erfindung ist es vorgesehen, dass der Versorgungsstrang dauerhaft mit dem Saat- und/oder Pflanzenträger in Kontakt steht. Bei einer solchen Ausgestaltung ist es sinnvoll, wenn an einer Flüssigkeitsabgabeöffnung des Versorgungsrohres oder der Versorgungsrinne, dem Versorgungsstrang oder einer anderen Stelle der die Flüssigkeit leitenden Komponenten des Saat- und/oder Pflanzsystems wenigstens ein Ventil vorgesehen ist, mit dem die Flüssigkeitszufuhr zum Versorgungsstrang und/oder vom Versorgungsstrang zum Saat- und/oder Pflanzenträger gesteuert oder reguliert werden kann.

Es hat sich als zweckdienlich erwiesen, wenn der Saat- und/oder Pflanzenträger mittels einer Gleitlagerung an oder in der Halterung gelagert ist. Hierfür ist die Halterung vorzugsweise als Rinne oder Rohr ausgebildet, in welcher bzw. welchem oder an welcher bzw. welchem die Gleitlagerung, welche den wenigstens einen Saat- und/oder Pflanzenträger hält und führt, vorgesehen ist. Das Halten und Führen des Saat- und/oder Pflanzenträgers in der Gleitlagerung bietet den Vorteil, dass der wenigstens eine Saat- und/oder Pflanzenträger einfach beispielsweise durch Einfädeln in die Gleitlagerung eingebracht und beispielsweise durch einfaches Herausziehen wieder aus dieser herausgebracht werden kann. Ferner kann der wenigstens eine Saat- und/oder Pflanzenträger bei Bedarf verschoben werden, sodass beispielsweise die Zugänglichkeit zu den Saat- und/oder Pflanzstellen verbessert wird und/oder eine freie Sicht geschaffen werden kann.

Bei der Ausbildung der Halterung als oder an der oder in der Versorgungsrinne bietet es sich an, die Gleitlagerung in der Versorgungsrinne anzubringen, da so Platz eingespart werden kann und die Versorgungsrinne zugleich eine optimale Halterung und Befestigung für die Gleitlagerung bietet, ohne dass ein zusätzliches Befestigungselement vorgesehen werden muss. Bei der Ausgestaltung der Halterung als geschlossenes Element, wie zum Beispiel als Versorgungsrohr, ist es aufgrund der schwierigen Zugänglichkeit zum Inneren des Versorgungsrohres empfehlenswert, die Gleitlagerung am Äußeren des Versorgungsrohres, wie zum Beispiel unterhalb oder an einer Seite des Versorgungsrohres, vorzusehen.

Wenn mehrere Saat- und/oder Pflanzenträger mittels der Gleitlagerung an oder in der Halterung gelagert sind, können diese untereinander mittels einer permanenten oder lösbaren Verbindung gekoppelt sein, wodurch die gekoppelten Saat- und/oder Pflanzenträger synchron beispielsweise in der Versorgungsrinne oder dem Versorgungsrohr oder entlang einer anderen, durch eine Komponente des erfindungsgemäßen Saat- und/oder Pflanzsystems ausgebildeten Bahn verschoben werden können und so ein hängendes Fördersystem bilden.

In einer weiteren optionalen Ausgestaltungsform des erfindungsgemäßen Saat- und/oder Pflanzsystems ist vorgesehen, dass das Versorgungsrohr oder die Versorgungsrinne die Halterung des Saat- und/oder Pflanzenträgers ausbildet. Eine solche Ausführungsform des erfindungsgemäßen Saat- und/oder Pflanzsystems bietet den Vorteil, dass auf eine zusätzliche, vorzugsweise parallel zu dem Versorgungsrohr oder der Versorgungsrinne angebrachte, separate Halterung für den wenigstens einen Saat- und/oder Pflanzenträger verzichtet werden kann. Damit kann nicht nur der Platzbedarf des erfindungsgemä-βen Saat- und/oder Pflanzsystems reduziert werden, sondern auch die Kosten für dieses System können gesenkt werden.

Vorteilhafterweise kann bei der Ausgestaltung des mit Flüssigkeit gefüllten oder zu füllenden Versorgungsrohres oder der mit Flüssigkeit gefüllten oder zu füllenden Versorgungsrinne als Halterung auch auf einen zusätzlichen Versorgungsstrang verzichtet werden, da hier der Saat- und/oder Pflanzenträger unmittelbar von dem Versorgungsrohr oder der Versorgungsrinne mit der Flüssigkeit versorgt werden kann. Hierfür kann in Abhängigkeit von der Anordnung des Saat- und/oder Pflanzenträgers an oder in der Nähe von dem Versorgungsrohr oder der Versorgungsrinne jedoch ein zusätzliches Flüssigkeitszuführelement zum Einsatz kommen. Das Flüssigkeitszuführelement kann beispielsweise als Röhrchen oder Schlauch ausgebildet sein und die Flüssigkeit aus dem Versorgungsrohr oder der Versorgungsrinne zum Saat- und/oder Pflanzenträger leiten.

Zum Halten des wenigstens einen Saat- und/oder Pflanzenträgers können an dem Versorgungsrohr oder der Versorgungsrinne beispielsweise Haken, Klemmelemente, Schellen oder andere Haltemittel vorgesehen werden.

Ebenso ist es aber auch möglich, den Saat- und/oder Pflanzenträger und den Versorgungsstrang direkt an dem Versorgungsrohr oder der Versorgungsrinne vorzusehen bzw. mit diesem zu verbinden.

Besonders bevorzugt führt der Versorgungsstrang durch eine Öffnung in einem Boden des Versorgungsrohres oder der Versorgungsrinne und hängt von dem Boden nach unten. Bei dieser Ausführungsform wird der Versorgungsstrang direkt durch die Öffnung in dem Boden des Versorgungsrohres oder der Versorgungsrinne mit der durch das oder in dem Versorgungsrohr oder durch die oder in der Versorgungsrinne fließenden Flüssigkeit versorgt.

Dabei kann der Versorgungsstrang durch einen in dem Versorgungsstrang eingebrachten Knoten oder durch ein in dem Versorgungsrohr oder der Versorgungsrinne vorgesehenes Befestigungselement in dem Versorgungsrohr oder der Versorgungsrinne gehalten werden. Die Öffnung im Boden des Versorgungsrohres oder der Versorgungsrinne kann beispielsweise als Bohrung, als Öffnung mit Filter, Sieb, Ventil und/oder Düse, als Öffnung mit eingebrachtem Röhrchen oder Schlauch oder als andersartig ausgestaltete Öffnung vorgesehen werden.

In einer Ausgestaltungsform der Erfindung, in welcher das Versorgungsrohr oder die Versorgungsrinne die Halterung für den Saat- und/oder Pflanzenträger ausbildet, ist es auch möglich, den Saat- und/oder Pflanzenträger durch diese Öffnung zu führen und diesen im Inneren des Versorgungsrohres oder der Versorgungsrinne zu befestigen.

Gemäß einer anderen vorteilhaften Ausgestaltungsvariante des erfindungsgemäßen Saat- und/oder Pflanzsystems ist vorgesehen, dass der Versorgungsstrang in einer Rinnensenke der Versorgungsrinne fixiert ist und über einen Rinnenrand führt. Hierfür wird in der Versorgungsrinne ein Befestigungselement vorgesehen, mit dem der Versorgungsstrang in der Rinnensenke gehalten werden kann.

Das Anbringen des Saat- und/oder Pflanzenträgers in der Rinnensenke der Versorgungsrinne ist von Vorteil, da der Saat- und/oder Pflanzenträger auch bei geringem Flüssigkeitsstand in der Rinnensenke Flüssigkeit aufnehmen kann, wobei sich der Saat- und/oder Pflanzenträger beispielsweise mit einer Nährflüssigkeit über Kapillarsaugkräfte selbst versorgen kann. In weiteren Ausgestaltungsvarianten der vorliegenden Erfindung kann der Saat- und/oder Pflanzenträger in Abhängigkeit des Flüssigkeitsstandes aber auch außerhalb der Rinnensenke platziert und fixiert sein.

In einem weiteren Ausführungsbeispiel der vorliegenden Erfindung können an der Versorgungsrinne wenigstens zwei Saat- und/oder Pflanzenträger, die in einer Rinnensenke der Versorgungsrinne fixiert sind, vorgesehen sein. Beispielsweise können bei einer derartigen Ausgestaltung des erfindungsgemäßen Saat- und/oder Pflanzsystems die wenigstens zwei Saat- und/oder Pflanzenträger einander gegenüberliegend an beiden Seiten an der Versorgungsrinne angeordnet sein. Damit können die wenigstens zwei Saat- und/oder Pflanzenträger vorzugsweise an demselben in der Versorgungsrinne vorgesehenen Befestigungselement befestigt werden. Ferner erlaubt eine solche Anordnung der Saat- und/oder Pflanzenträger die Anbringung und Flüssigkeitsversorgung möglichst vieler Saat- und/oder Pflanzenträger an einer Versorgungsrinne. Entsprechend kann kostengünstig und mit geringem Platzbedarf ein effizientes Saat- und/oder Pflanzsystem bereitgestellt werden.

Eine weitere bevorzugte Ausführungsform des Saat- und/oder Pflanzsystems sieht vor, dass der Versorgungsstrang an dem gleichen Versorgungsrohr oder der gleichen Versorgungsrinne wie der Saat- und/oder Pflanzenträger fixiert ist. Dies hat den Vorteil, dass die Kosten und der Platzbedarf des erfindungsgemäßen Saat- und/oder Pflanzsystems reduziert werden können, da auf eine parallel angeordnete Halterung für den wenigstens einen Saat- und/oder Pflanzenträger und für den Versorgungsstrang verzichtet werden kann.

In einer Weiterbildung der vorliegenden Erfindung ragt in die Versorgungsrinne wenigstens ein Versorgungsstrang und ist etwa mittig an oder in der Versorgungsrinne befestigt, wobei an der Versorgungsrinne wenigstens zwei Saat- und/oder Pflanzenträger befestigt und so zu dem Versorgungsstrang geführt sind, dass die Saat- und/oder Pflanzstellen der Saat- und/oder Pflanzenträger in flüssigkeitsleitendem Kontakt mit dem Versorgungsstrang sind. So können mehrere Saat- und/oder Pflanzenträger an dem Versorgungsstrang von außen anliegen und über diesen mit der Flüssigkeit versorgt werden. Hierdurch kann eine sehr günstige und platzsparende Variante des erfindungsgemäßen Saat- und/oder Pflanzsystems zur Verfügung gestellt werden.

Bevorzugte Ausführungsformen der vorliegenden Erfindung, deren Aufbau, Funktion und Vorteile werden im Folgenden anhand von Figuren näher erläutert, wobei
- Figur 1: schematisch eine mögliche Ausgestaltung eines erfindungsgemäßen Saat- und/oder Pflanzsystems in einer Vorderansicht zeigt;
- Figur 2: schematisch eine Möglichkeit der Befestigung eines Saat- und/oder Pflanzenträgers einer Ausführungsform eines erfindungsgemäßen Saat- und/oder Pflanzsystems an einer Halterung in einer Seitenansicht zeigt;
- die Figuren 3a und 3b: schematisch verschiedene Ausgestaltungsmöglichkeiten eines thermogeformten oder tiefgezogenen Bereiches von Saat- und/oder Pflanzenträgern erfindungsgemäßer Saat- und/oder Pflanzsysteme jeweils in einer Seitenansicht zeigen;
- Figur 4: schematisch eine Variante einer um einen Saat- und/oder Pflanzenträger eines erfindungsgemäßen Saat- und/oder Pflanzsystems angebrachten Hülse in einer Vordereinsicht zeigt;
- die Figuren 5a und 5b: schematisch ein weiteres Ausführungsbeispiel eines erfindungsgemäßen Saat- und/oder Pflanzsystems mit aus dem Saat- und/oder Pflanzenträger ausgebildeten Hülsen jeweils in einer Vorderansicht zeigen;
- Figur 6: schematisch eine andere Variante eines erfindungsgemäßen Saat- und/oder Pflanzsystems mit um den Saat- und/oder Pflanzenträger angebrachten Hülsen in einer Vorderansicht zeigt;
- Figur 7: schematisch eine Ausgestaltungsmöglichkeit eines erfindungsgemäßen Saat- und/oder Pflanzsystems mit einer Halterung für einen Saat- und/oder Pflanzenträger und einen Versorgungsstrang in einer Versorgungsrinne in einer Vorderansicht zeigt;
- Figur 8: schematisch eine weitere Variante eines erfindungsgemäßen Saat- und/oder Pflanzsystems mit einem mittig angeordneten Versorgungsstrang, von dem zwei Saat- und/oder Pflanzenträger mit Flüssigkeit versorgt werden, in einer Vorderansicht zeigt;
- Figur 9: schematisch ein weiteres Ausführungsbeispiel eines erfindungsgemäßen Saat- und/oder Pflanzsystems mit einer in einer Versorgungsrinne vorgesehenen Halterung für einen Saat- und/oder Pflanzenträger und einen Versorgungsstrang in einer Vorderansicht zeigt;
- Figur 10: schematisch eine alternative Möglichkeit der Ausgestaltung eines erfindungsgemäßen Saat- und/oder Versorgungssystems mit einer in einer Versorgungsrinne vorgesehenen Halterung für zwei beidseitig der Versorgungsrinne hinab hängende Saat- und/oder Pflanzenträger in einer Vorderansicht zeigt; und
- Figur 11: schematisch einen Teil einer weiteren Ausbildung eines erfindungsgemäßen Saat- und/oder Versorgungssystems mit zwei über eine Versorgungsrinne mit Flüssigkeit versorgten Saat- und/oder Pflanzenträgern, die über einen durchgängig durch die Versorgungsrinne verlaufenden Strang miteinander verbunden sind, in einer Vorderansicht zeigt.

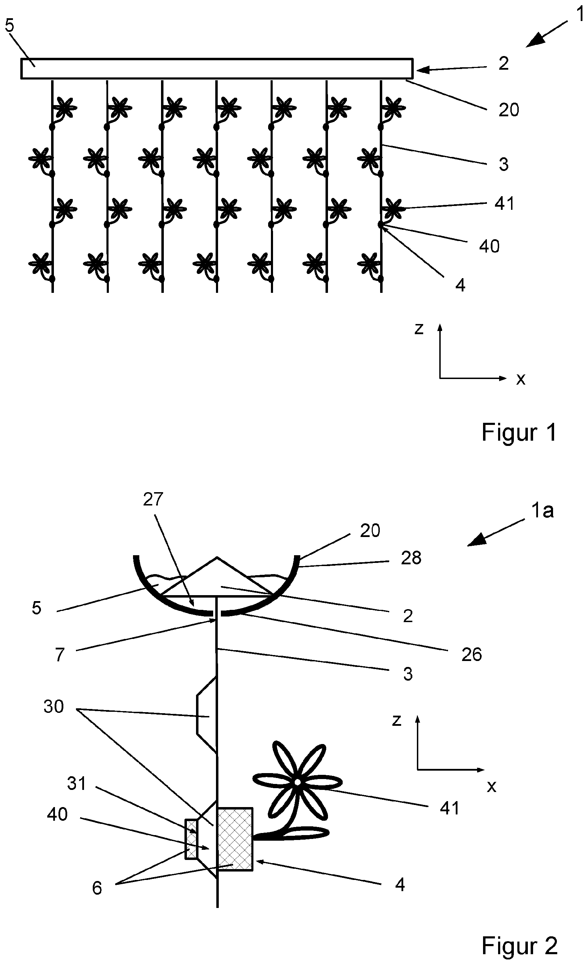

Figur 1 zeigt schematisch eine mögliche Ausführungsform eines erfindungsgemäßen Saat- und/oder Pflanzsystems 1 in einer Vorderansicht. Das Saat- und/oder Pflanzsystem 1 weist eine Mehrzahl an Saat- und/oder Pflanzenträgern 3 auf, die an Halterungen 2 des Saat- und/oder Pflanzsystems 1 nach unten hängend befestigt sind.

Die Saat- und/oder Pflanzenträger 3 sind strangförmig ausgebildet. Sie können beispielsweise in Form von Bändern, Schnüren, Seilen, Schläuchen oder Kordeln ausgebildet sein. Die Saat- und/oder Pflanzenträger 3 können beispielsweise aus extrudiertem Kunststoff, aus Blech oder aus Textilband ausgebildet sein.

In dem in Figur 1 gezeigten Ausführungsbeispiel ist die Halterung 2 innerhalb einer Versorgungsrinne 20 ausgebildet. In anderen Ausführungsbeispielen kann anstelle der Versorgungsrinne 20 auch ein Versorgungsrohr vorgesehen sein. Die Halterung 2 kann aber auch an anderen geeigneten Stellen des Saat- und/oder Pflanzsystems 1 vorgesehen sein und/oder unterschiedliche Formen aufweisen. So kann die Halterung 2 beispielsweise auch als Rohr, als Stange, als Längsprofil, in Form eines oder mehrerer Haken oder dergleichen ausgestaltet sein. Je nach Ausbildung der Halterung 2 kann die Versorgungsrinne 20 separat vorgesehen sein oder einstückig mit der Halterung 2 ausgebildet sein. Überdies kann in anderen Ausführungsformen der Erfindung auch nur ein Saat- und/oder Pflanzenträger 3 an der Versorgungsrinne 20 oder einem Versorgungsrohr befestigt sein.

Die Versorgungsrinne 20 oder das Versorgungsrohr dient der Aufnahme und Weiterleitung einer Flüssigkeit 5. Die Flüssigkeit 5 kann beispielsweise Leitungswasser, Regenwasser und/oder eine Nährstofflösung, aber auch wenigstens eine andere wässrige Lösung, ein Öl und/oder ein Gel aufweisen.

Über die Versorgungsrinne 20 oder das Versorgungsrohr werden die Saat- und/oder Pflanzenträger 3 mit dieser Flüssigkeit 5 versorgt. Aufgrund der hängenden Befestigung der Saat- und/oder Pflanzenträger 3 an der Versorgungsrinne 20 oder dem Versorgungsrohr kann sich die Flüssigkeit 5 ausgehend von der Versorgungsrinne 20 jeweils in dem gesamten Saat- und/oder Pflanzenträger 3 ausbreiten.

Jeder der in Figur 1 gezeigten Saat- und/oder Pflanzenträger 3 weist mehrere voneinander beabstandete Saat- und/oder Pflanzstellen 4 auf. In dem gezeigten Ausführungsbeispiel ist an jeder der Saat- und/oder Pflanzstellen 4 eine Pflanze 41 vorgesehen. In anderen, nicht gezeigten Ausführungsformen der vorliegenden Erfindung können auch nur einzelne der Saat- und/oder Pflanzstellen 4 mit Pflanzen 41 versehen sein. Ferner können anstelle von und/oder in Ergänzung zu den dargestellten Pflanzen 41 auch Samen bzw. Saatgut an den Saat- und/oder Pflanzstellen 4 vorgesehen sein.

In der Ausführungsform von Figur 1 sind die Saat- und/oder Pflanzstellen 4 an den Saat- und/oder Pflanzenträgern 3 jeweils in gleichem Abstand zueinander und bezüglich der einzelnen, nebeneinander hängenden Saat- und/oder Pflanzenträger 3 symmetrisch vorgesehen. Speziell sind in dem gezeigten Ausführungsbeispiel benachbarte Saat- und/oder Pflanzstellen 4 eines Saat- und/oder Pflanzenträgers 4 an diesem gleichmäßig zueinander versetzt nach links bzw. nach rechts ragend angeordnet. In anderen, nicht gezeigten Ausführungsformen der vorliegenden Erfindung können die Saat- und/oder Pflanzstellen 4 auch unsymmetrisch und/oder unregelmäßig an den jeweiligen Saat- und/oder Pflanzenträgern 3 verteilt vorgesehen sein.

Die Pflanzen 41 sind jeweils in Hülsen 40 vorgesehen. In dem Beispiel von Figur 1 ist in jeder der Hülsen 40 jeweils eine Pflanze 41 vorgesehen. In anderen Ausführungsvarianten der vorliegenden Erfindung können die einzelnen Hülsen 40 auch mehrere Pflanzen 41 bzw. Samen tragen.

Die in die Versorgungsrinne 20 eingebrachte Flüssigkeit 5 kann, bevor sie in die Versorgungsrinne 20 oder das Versorgungsrohr eingeleitet wird, beispielsweise in einem Flüssigkeitssammelbehälter, -becken oder dergleichen bevorratet werden. Aus dem Flüssigkeitssammelbehälter kann die Flüssigkeit 5 mittels einer Flüssigkeitszuführvorrichtung in die Versorgungsrinne 20 abgegebenen werden. Die Flüssigkeitszuführvorrichtung kann Rohre, Rinnen oder Schläuche und/oder ein Fördersystem, mit wenigstens einer Pumpe, wenigstens einem Ventil, wenigstens einem Sieb und/oder dergleichen, beinhalten. Ferner kann die Flüssigkeit 5 auch direkt von der Versorgungsrinne 20, beispielsweise durch Aufnahme von Regenwasser, aufgenommen werden, ohne zuvor in einem Flüssigkeitssammelbehälter oder ähnlichem gespeichert zu sein.

Figur 2 zeigt schematisch eine Möglichkeit der Befestigung eines Saat- und/oder Pflanzenträgers 3 eines erfindungsgemäßen Saat- und/oder Pflanzsystems 1a, welches beispielsweise ein Teil des Saat- und/oder Pflanzsystems 1 aus Figur 1 sein kann, an einer Halterung 2 in einer Seitenansicht. Dabei bezeichnen gleiche Bezugszeichen wie in Figur 1 gleiche oder ähnliche Komponenten, weshalb an dieser Stelle auf die vorhergehende Beschreibung dieser Komponenten verwiesen wird.

In der Ausführungsform von Figur 2 ist der Saat- und/oder Pflanzenträger 3 durch eine Öffnung 7 einer Versorgungsrinne 20 geführt und innerhalb der Versorgungsrinne 20 mittels einer Halterung 2 befestigt. Die Halterung 2 ist in diesem Ausführungsbeispiel als dreieckförmiges Element ausgebildet, kann jedoch auch eine andere Form und Ausbildung aufweisen. Die Halterung 2 ist so schwer, dass sie auch bei Füllung der Versorgungsrinne 20 mit der Flüssigkeit 5 aufgrund ihres Eigengewichtes auf der Innenwand in einem Bodenbereich der Versorgungsrinne 20 aufliegt und nicht nach oben schwimmt, sodass mit Hilfe der Halterung 2 eine Fixierung des Saat- und/oder Pflanzenträgers 3 in der Versorgungsrinne 20 erfolgt. Ferner weist die Halterung 2 einen größeren Querschnitt als die Öffnung 7 auf, sodass die Halterung 2 nicht durch die Öffnung 7 gelangen kann. Die Halterung 2 weist eine solche Form auf, dass die Flüssigkeit 5 in der Versorgungsrinne 20 die Halterung 2 gut umfließen kann.

In weiteren Ausführungsformen kann der Saat- und/oder Pflanzenträger 3 auch durch wenigstens einen in den Saat- und/oder Pflanzenträger 3 eingebrachten oder an diesem angebrachten Knoten in der Öffnung 7 der Versorgungsrinne 20 gehalten werden, wobei in diesem Fall der Knoten die Halterung 2 ausbildet. Ferner kann der Saat- und/oder Pflanzenträger 3 auch mit einem oder mehreren an der Versorgungsrinne 20 vorgesehenen Haken, wenigstens einer Öse und/oder einer anders ausgebildeten Halterung 2 in oder an der Versorgungsrinne 20 gehalten werden. Ebenso ist es möglich, dass der Saat- und/oder Pflanzenträger 3 seitlich beabstandet von der Versorgungsrinne 20 mit einer entsprechenden Halterung 2 gehalten wird. In diesem Fall ist es erforderlich, dass der Saat- und/oder Pflanzenträger 3 mit der Versorgungsrinne 20 beispielsweise über wenigstens ein Rohr oder wenigstens einen Schlauch oder wenigstens eine Rinne oder wenigstens ein anderes, die Flüssigkeit 5 leitendes Element in flüssigkeitsleitendem Kontakt steht.

An einer zu einer Rinnensenke 27 hinzeigenden Fläche der Halterung 2 ist der Saat- und/oder Pflanzenträger 3 an der Halterung 2 angebracht. Der Saat- und/oder Pflanzenträger 3 kann beispielsweise in die Halterung 2 eingeklemmt sein oder mittels eines Hakens, einer Öse oder dergleichen an der Halterung 2 gehalten werden. Ferner kann der Saat- und/oder Pflanzenträger 3 bei geeigneter Ausbildung auch durch Schweißen, Kleben, Nieten oder ähnlichem mit der Halterung 2 verbunden sein.

Wie in Figur 2 veranschaulicht, ist in der Versorgungsrinne 20 eine als Versorgungsflüssigkeit für die Samen 42 und/oder Pflanzen 41 des Saat- und/oder Pflanzenträgers 3 dienende Flüssigkeit 5 vorgesehen. Indem der Saat- und/oder Pflanzenträger 3 in die Versorgungsrinne 20 ragt, kann dieser die Flüssigkeit 5 aufnehmen und durch den gesamten von der Versorgungsrinne 20 hängenden Saat- und/oder Pflanzenträger 3 leiten, um daran vorgesehene Pflanzen 41 oder Samen 42 mit der Flüssigkeit 5 zu versorgen.

In der in Figur 2 dargestellten Ausführungsform ist der Saat- und/oder Pflanzenträger 3 als extrudiertes Band ausgebildet, welches Hülsen 40 aufweist, die durch thermogeformte Bereiche 30 des Saat- und/oder Pflanzenträgers 3 ausgebildet sind. Das hierfür zum Einsatz gekommene Thermoformen ist einem Tiefziehprozess vergleichbar. Die Hülse 40 ist in dem in Figur 2 gezeigten Ausführungsbeispiel quer zur Längsausdehnung z des Saat- und/oder Pflanzenträgers 3 ausgerichtet.

In die Hülsen 40 ist ein Substrat 6 eingesteckt, welches Pflanzen 41 und/oder Samen 42 trägt. Die Samen 42 und/oder Pflanzen 41 können dabei in und/oder an dem Substrat 6 vorgesehen sein. Ebenso kann das Substrat 6 die Samen 42 und/oder Pflanzen 41 bereits beim Einsetzen in die Hülse 40 enthalten, oder die Samen 42 und/oder Pflanzen 41 werden erst nach dem Einsetzen des Substrates 6 in die Hülse 40 in das Substrat 6 eingebracht.

Wie in Figur 2 veranschaulicht, ist jeweils ein Bodenbereich 31 der thermogeformten Bereiche 30 ausgestanzt, sodass Öffnungen entstehen, sodass das Substrat 6 beidseitig aus den Hülsen 40 herausragen kann. Damit kann das Substrat 6 nicht nur geeignet gehalten werden, sondern kann, wie es die nachfolgend beschriebenen Ausführungsformen der vorliegenden Erfindung noch zeigen, einerseits an der Wurzelseite der Pflanzen 41 optimal mit der Flüssigkeit 5 versorgt werden, während auf der anderen Substratseite die Pflanze 41 wachsen kann.

In der in Figur 2 gezeigten Variante des erfindungsgemäßen Saat- und/oder Pflanzsystems 1a ist der thermogeformte Bereich 30 trapezförmig ausgebildet, kann in anderen Ausgestaltungsformen der Erfindung aber auch zylinderförmig, quaderförmig oder in einer anderen Form ausgebildet sein. Zudem können auch die Abmessungen der thermogeformten bzw. tiefgezogenen Bereiche 30 variieren, womit diese optimal an die eingesetzten Pflanzensorten angepasst werden können. Ebenso ist auch die Anzahl an thermogeformten bzw. tiefgezogenen Bereichen 30, welche an dem Saat- und/oder Pflanzenträger 6 vorgesehen sind und die Hülsen 40 ausbilden, variabel.

Die Ausführungsform von Figur 2 weist eine starre, geradlinig ausgebildete Versorgungsrinne 20 auf, welche in anderen Varianten des erfindungsgemäßen Saat- und/oder Pflanzsystems 1 auch als Versorgungsrohr ausgebildet sein kann. Zudem kann die Versorgungsrinne 20 oder das Versorgungsrohr auch wellenförmig oder flexibel ausgebildet sein. Überdies können auch die Abmessungen, Formen oder Materialien der Versorgungsrinne 20 oder des Versorgungsrohres variieren.

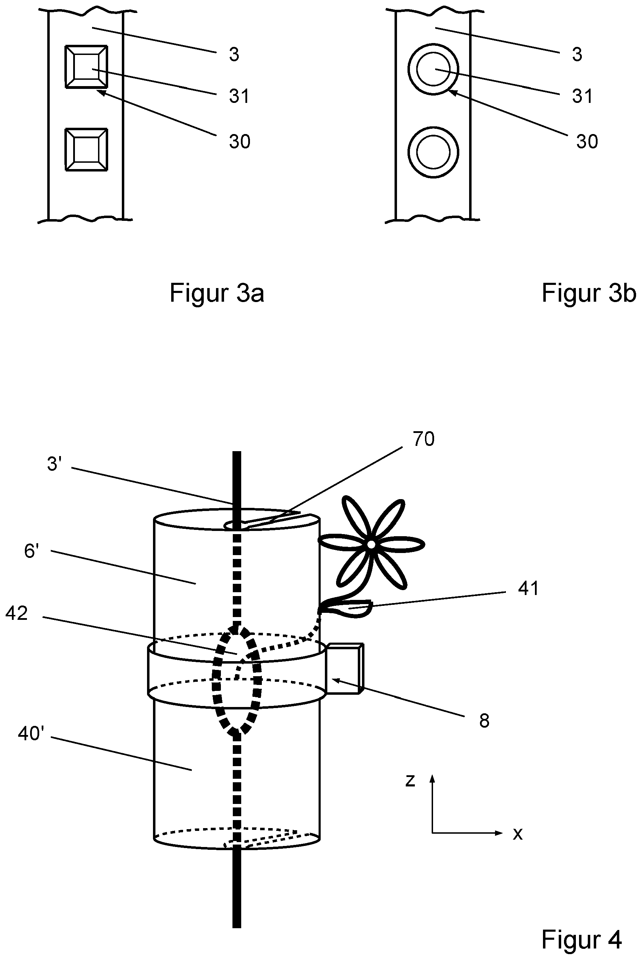

Die Figuren 3a und 3b zeigen schematisch verschiedene Ausgestaltungsmöglichkeiten thermogeformter Bereiche 30 von aus Kunststoff bestehenden Saat- und/oder Pflanzenträgern 3 von erfindungsgemäßen Saat- und/oder Pflanzsystemen jeweils in einer Seitenansicht. Wie in Figur 3a dargestellt, kann der thermogeformte oder tiefgezogene Bereich 30 eines Saat- und/oder Pflanzenträgers 3 beispielsweise eine pyramidenstumpfförmige Ausgestaltung aufweisen. Der Boden 31 des thermogeformten oder tiefgezogenen Bereiches 30 ist dabei vorzugsweise ausgestanzt oder auf andere Weise geöffnet, wodurch sich ein hier nicht dargestelltes Substrat 6 optimal in den thermogeformten oder tiefgezogenen Bereich 30 stecken lässt und darin gut gehalten werden kann.

Wie in Figur 3b gezeigt, kann der thermogeformte oder tiefgezogene Bereich 30 jedoch auch eine kegelstumpfförmige Form aufweisen, dessen Bodenbereich 31 ebenfalls vorzugsweise ausgestanzt oder auf eine andere geeignete Weise geöffnet ist.

In anderen Ausführungsvarianten der vorliegenden Erfindung kann der thermogeformte oder tiefgezogene Bereich 30, der die Hülse 40 ausbildet, selbstverständlich auch andere Ausgestaltungsformen und Abmessungen aufweisen. Ebenso ist es auch möglich, verschiedene Ausgestaltungsmöglichkeiten von thermogeformten oder tiefgezogenen Bereichen 30 an einem Saat- und/oder Pflanzenträger 3 vorzusehen.

Figur 4 zeigt schematisch eine Variante einer um einen Saat- und/oder Pflanzenträger 3' angebrachten Hülse 40' eines erfindungsgemäßen Saat- und/oder Pflanzsystems in einer Vorderansicht, wobei gleiche Bezugszeichen wie in den vorangegangen Figuren gleiche Komponenten bezeichnen und hiermit aus deren Beschreibung verwiesen wird.

Vorzugsweise ist der Saat- und/oder Pflanzenträger 3' in dieser Ausführungsform als Seil, Schnur, Kordel, Strick, Kette oder Schlauch ausgebildet und weist an voneinander beabstandeten Stellen ein als Hülse 40' ausgebildetes Substrat 6' auf.

Das Substrat 6' weist in dem in Figur 4 gezeigten Beispiel einen Öffnungsspalt 70 zum einfachen Überziehen des Substrates 6` über den Saat- und/oder Pflanzenträger 3' auf. Hierzu ist das Substrat 6' vorzugsweise derart flexibel ausgestaltet, dass es sich zum Überziehen einfach weiten lässt und nach dem Überziehen derart eng zusammenzieht, dass es auf dem Saat- und/oder Pflanzenträger 3' klemmt. Das Substrat 6' ist in diesem Ausführungsbeispiel zylinderförmig ausgebildet, kann in anderen Varianten aber auch andere Ausgestaltungsformen aufweisen.

In dem Substrat 6' ist bzw. sind ein oder mehrere Samen 42 und/oder wenigstens eine Pflanze 41 vorgesehen, welche aufgrund des Substrates 6' optimal mit Nährstoffen versorgt wird und gut wurzeln kann.

Zum Halten des Substrates 6' ist in dem in Figur 4 gezeigten Ausführungsbeispiel eine Schelle 8 um das Substrat 6' angebracht. In anderen Ausführungsbeispielen der vorliegenden Erfindung können anstelle von oder zusätzlich zu der Schelle 8 auch Klemmen, Bänder, Schnüre oder ähnliches zum Fixieren des Substrates 6' an dem Saat- und/oder Pflanzenträger 3' verwendet werden. Ebenso kann das Substrat 6` auch mittels einer unterhalb des Substrates 6' angebrachten Verdickung des Saat- und/oder Pflanzenträgers 3`, mittels einer unterhalb des Substrates 6' vorgesehenen Klemme oder ähnlichem fixiert werden.

Das Substrat 6' ist in der in Figur 4 veranschaulichten Ausführungsvariante längs zur Längsausdehnung z des Saat- und/oder Pflanzenträgers 3' ausgerichtet. Dadurch kann das Substrat 6` besonders gut an dem Saat- und/oder Pflanzenträger 3' fixiert werden. Das Substrat 6` kann in anderen Ausführungsformen jedoch auch quer zur Längsausdehnung z des Saat- und/oder Pflanzenträgers 3' ausgerichtet werden.

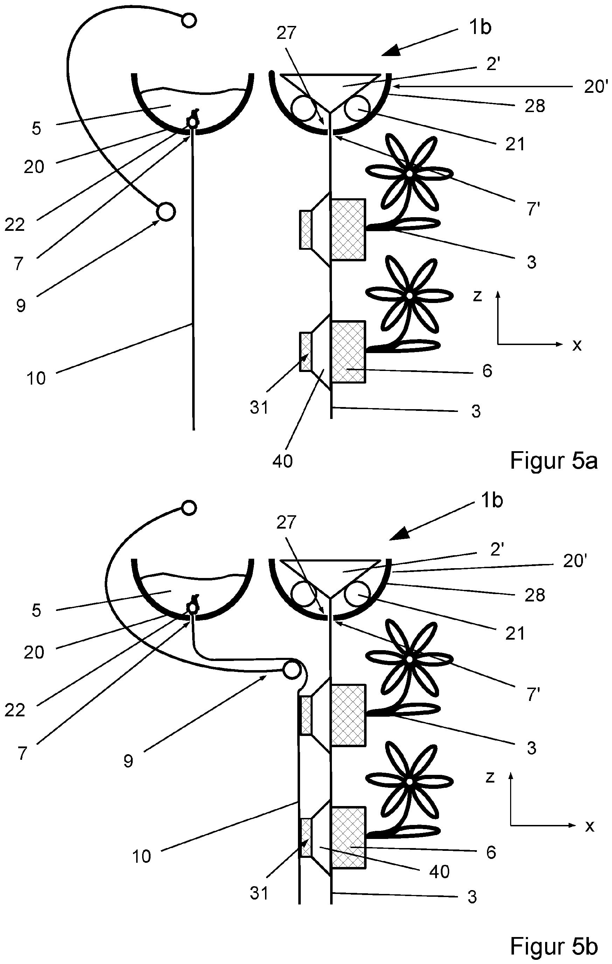

Die Figuren 5a und 5b zeigen schematisch ein weiteres Ausführungsbeispiel eines erfindungsgemäßen Saat- und/oder Pflanzsystems 1b mit aus einem Saat- und/oder Pflanzenträger 3 ausgebildeten Hülsen 40 in einer Vorderansicht, wobei gleiche Bezugszeichen wie in den Figuren 1 bis 4 gleiche Komponenten bezeichnen. Auf die obigen Ausführungen zu diesen Komponenten wird hiermit verwiesen.

In der in den Figuren 5a und 5b gezeigten Ausführungsvariante ist wenigstens ein Saat- und/oder Pflanzenträger 3 an einer Rinne 20' vorgesehen. Zum Befestigen des wenigstens einen Saat- und/oder Pflanzenträgers 3 ist dieser durch eine Öffnung 7' der Rinne 20' in das Innere der Rinne 20' geführt und wird dort durch eine Halterung 2' gehalten.

Die Halterung 2' weist in diesem Ausführungsbeispiel eine dreieckige Form auf, wobei eine in Richtung einer Rinnensenke 27 zeigende Ecke der Halterung 2' den Saat- und/oder Pflanzenträger 3 in der Rinne 20' hält. Die zur Rinnensenke 27 zeigende Ecke der Halterung 2' ist durch mittels in der Rinne 20' eingebrachte Rollen 21 geführt, wodurch der Saat- und/oder Pflanzenträger längs der Rinnenausdehnung in der Rinne 20' bewegbar ist.

In weiteren Ausführungsvarianten muss die Halterung 2 oder 2' auch nicht geführt sein, sondern kann fest in oder an der Rinne 20' oder einer anderen geeigneten Stelle des Saat- und/oder Pflanzsystems 1b angebracht sein. Die Halterung 2' kann auch mittels eines Gleitlagers oder ähnlichem in der Rinne 20' geführt werden. Ebenso kann die Halterung 2' auch andersartig ausgestaltet sein, so kann diese beispielsweise auch als Haken, Klemmeinrichtung, Öse oder dergleichen ausgestaltet sein. Der Saat- und/oder Pflanzenträger 3 ist jedoch derart an der Halterung 2' angebracht oder von dieser derart aufgenommen, dass er von der Rinne 20' hinab hängt.

Der in den Figuren 5a und 5b gezeigte Saat- und/oder Pflanzenträger 3 ist derart an der Rinne 20' befestigt, dass der geöffnete Bodenbereich 31 des thermogeformten oder tiefgezogenen Bereiches 30, also der Hülse 40 des Saat- und/oder Pflanzenträgers 3, hin zu einem parallel angeordneten Versorgungsstrang 10 zeigt. Der Versorgungsstrang 10 ist an einer neben der Rinne 20' vorgesehenen Versorgungsrinne 20 fixiert.

Der Versorgungsstrang 10 wird in dem Ausführungsbeispiel der Figuren 5a und 5b durch eine Öffnung 7 in die Versorgungsrinne 20 eingeführt und dort durch einen in den Saat- und/oder Pflanzenträger 3 eingebrachten Knoten 22 gehalten. Eine derartige Befestigung ist nicht nur einfach und kostengünstig, sondern sorgt zudem auch für eine optimale Flüssigkeitsversorgung des Versorgungsstranges 10.

Wie in den Figuren 5a und 5b veranschaulicht, weist das Saat- und/oder Pflanzsystem 1b einen Schwenkarm 9 auf, welcher derart platziert ist, dass er problemlos den Versorgungsstrang 10 mit dem durch den geöffneten Bereich 31 des thermogeformten oder tiefgezogenen Bereiches 30 ragenden Substrat 6 in Kontakt bringen kann.

Vorteilhafterweise ist der Schwenkarm 9, wie in Figur 5b zu sehen, derart an dem Saat- und/oder Pflanzsystem 1b vorgesehen, dass ein Bewegen des Schwenkarmes 9 dazu führt, dass der Versorgungsstrang 10 soweit in Richtung des Saat- und/oder Pflanzenträgers 3 gedrückt wird, bis er das Substrat 6 kontaktiert bzw. berührt. Um möglichst alle an dem Saat- und/oder Pflanzenträger 3 vorgesehenen Substrate 6 geeignet über den Versorgungsstrang 10 mit der Flüssigkeit 5 versorgen zu können, ist es empfehlenswert, den Schwenkarm 9 möglichst weit oben am Saat- und/oder Pflanzsystem 1b anzubringen.

Das Kontaktieren des Saat- und/oder Pflanzenträgers 3 mit dem Versorgungsstrang 10 durch den Schwenkarm 9, welches dauerhaft oder auch nur zeitweise hergestellt werden kann, ermöglicht es, den Saat- und/oder Pflanzenträger 3 je nach Bedarf mit der Flüssigkeit 5 zu versorgen. Hierbei kann nicht nur die Kontakthäufigkeit, sondern auch dessen Kontaktdauer, beispielsweise über eine nicht gezeigte Steuer- und/oder Regelungseinheit des Saat- und/oder Pflanzsystems 1b, geregelt werden.

In anderen Ausführungsvarianten ist es jedoch auch möglich, dass der Saat- und/oder Pflanzenträger 3 in dauerhaftem Kontakt mit dem Versorgungsstrang 10 steht oder der Saat- und/oder Pflanzenträger 3 um den Versorgungsstrang 10 ausgebildet ist.

Die Flüssigkeitszufuhr kann über wenigstens ein an dem Versorgungsstrang 10 und/oder dem Saat- und/oder Pflanzenträger 3 vorgesehenes Ventil oder wenigstens eine daran vorgesehene Düse gesteuert wird. Ebenso ist es möglich, gleichzeitig zu dem Schwenkarm 9 wenigstens ein Ventil und/oder wenigstens eine Düse zur Regulierung der Flüssigkeitsabgabe vorzusehen.

In der in den Figuren 5a und 5b veranschaulichten Ausführungsvariante ist der Schwenkarm 9 oberhalb der Versorgungsrinne 20 angeordnet und geschwungen ausgebildet, sodass der Schwenkarm 9, ohne von der Versorgungsrinne 20 behindert zu werden, den Versorgungsstrang 10 mit dem Saat- und/oder Pflanzenträger 3 in Kontakt bringen kann. In weiteren Varianten der Erfindung kann der Schwenkarm 9 auch seitlich oder unterhalb der Versorgungsrinne 20 angeordnet sein. Zudem kann der Schwenkarm 9 geradlinig oder eckig ausgebildet sein. Ferner kann das Material und/oder die Größe des Schwenkarmes 9 in Abhängigkeit von den einzelnen Gegebenheiten ausgewählt und angepasst werden.

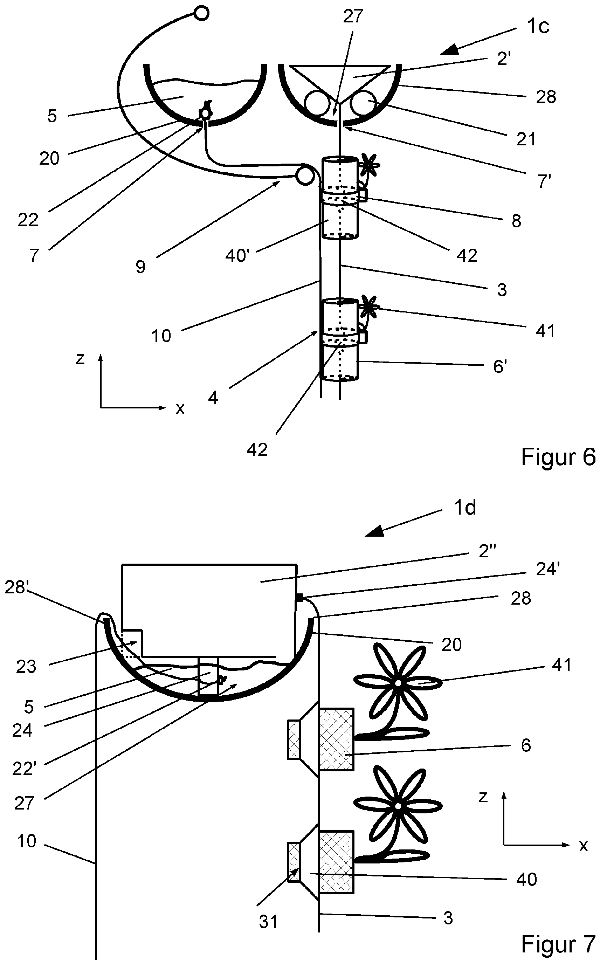

Figur 6 zeigt schematisch eine andere Variante eines erfindungsgemäßen Saat- und/oder Pflanzsystems 1c mit um einen Saat- und/oder Pflanzenträger 3' angebrachten Hülsen 40' in einer Vorderansicht. Dabei bezeichnen gleiche Bezugszeichen wie in den vorherigen Figuren gleiche Komponenten, weshalb an dieser Stelle auf die vorhergehende Beschreibung dieser Komponenten verwiesen wird.

Wie in den Figuren 5a und 5b gezeigt, umfasst auch das in Figur 6 dargestellte Saat- und/oder Pflanzsystem 1c eine Rinne 20' zum Halten eines Saat- und/oder Pflanzenträgers 3 und eine parallel dazu angeordnete Versorgungsrinne 20 zum Fixieren und zur Flüssigkeitsversorgung des Versorgungsstranges 10. Ferner weist auch das Saat- und/oder Pflanzsystem 1c einen Schwenkarm 9 auf, mit dem der Versorgungsstrang 10 gegen den Saat- und/oder Pflanzenträger 3 gedrückt werden kann.

Im Gegensatz zu der in den Figuren 5a und 5b gezeigten Ausführungsform weist der Saat- und/oder Pflanzenträger 3 jedoch um den Saat- und/oder Pflanzenträger 3 vorgesehene Substrate 6' auf, die hier die Hülsen 40' ausbilden. In dieser Ausführungsform kontaktiert der Versorgungsstrang 10 die Längsseiten der Substrate 6' bzw. der Hülsen 40'.

Figur 7 zeigt schematisch eine weitere Ausgestaltungsmöglichkeit eines erfindungsgemäßen Saat- und/oder Pflanzsystems 1d, bei dem ein Saat- und/oder Pflanzenträger 3 mit einer Halterung 2" in einer Versorgungsrinne 20 gehalten wird, in einer Vorderansicht. Auch hier bezeichnen bereits verwendete Bezugszeichen gleiche oder ähnliche Komponenten wie in den oben beschriebenen Figuren.

In der in Figur 7 gezeigten Ausführungsvariante sind an der Versorgungsrinne 20 ein Versorgungsstrang 10 als auch der Saat- und/oder Pflanzenträger 3 angebracht. Zum Halten des Versorgungsstranges 10 sowie des Saat- und/oder Pflanzenträgers 3 ist in der Versorgungsrinne 20 die Halterung 2" eingebracht, welche in dem gezeigten Ausführungsbeispiel quaderförmig ausgebildet ist und mittels ihres Eigengewichtes in der Versorgungsrinne 20 gehalten wird.

Die Halterung 2" ist derart groß ausgebildet, dass sie von den Seitenwänden der Versorgungsrinne 20 gehalten wird und nicht den Rinnenboden berührt. Dies bietet den Vorteil, dass die Flüssigkeit 5 problemlos unter der Halterung 2" in der Versorgungsrinne 20 fließen kann und der Saat- und/oder Pflanzenträger 3 optimal mit der Flüssigkeit 5 versorgt werden kann. Durch die in dem gezeigten Ausführungsbeispiel quaderförmige Ausgestaltung der Halterung 2" kann diese stabil in der Versorgungsrinne 20" liegen. In alternativen Ausführungsbeispielen der vorliegenden Erfindung kann die Halterung 2" jedoch auch andere Formen aufweisen. Ebenso kann die Halterung 2" auch aus den unterschiedlichsten Materialien ausgebildet sein.

Der Versorgungsstrang 10 als auch der Saat- und/oder Pflanzenträger 3 werden durch die Halterung 2" in der Versorgungsrinne 20 gehalten, wobei der Versorgungsstrang 10 und der Saat- und/oder Pflanzenträger 3 jeweils an einander gegenüber liegenden Rinnenrändern 28, 28' aus der Versorgungsrinne 20 herausgeführt werden und von diesen frei herabhängen.

Zum Halten des Versorgungsstranges 10 weist die Halterung 2" ein in die Rinnensenke 27 reichendes stangenartiges Befestigungselement 24 auf, um welches der Versorgungsstrang 10 vorzugsweise gebunden ist. Ferner kann der Versorgungsstrang 10 zum Fixieren aber auch in das stangenartige Befestigungselement 24 geklemmt werden oder mittels eines Hakens oder einer Öffnung an diesem befestigt werden. Das Fixieren des Versorgungsstranges 10 an dem stangenartigen Befestigungselement 24 in der Rinnensenke 27 ermöglicht, dass der Versorgungsstrang 10 ausreichend mit der in der Versorgungsrinne 20 befindlichen Flüssigkeit 5 versorgt werden kann.

Damit der Versorgungsstrang 10 beim Herausführen aus der Versorgungsrinne 20 nicht durch die in der Versorgungsrinne 20 eingebrachte Halterung 2" eingeklemmt wird und damit die Flüssigkeitszuführung unterbrochen wird, weist die Halterung 2" eine seitliche, unten angeordnete Aussparung 23 auf, unter welcher der Versorgungsstrang 10 nach außen geführt werden kann. Die Aussparung 23 ist hierbei an Form und Größe des Versorgungsstranges 10 angepasst.

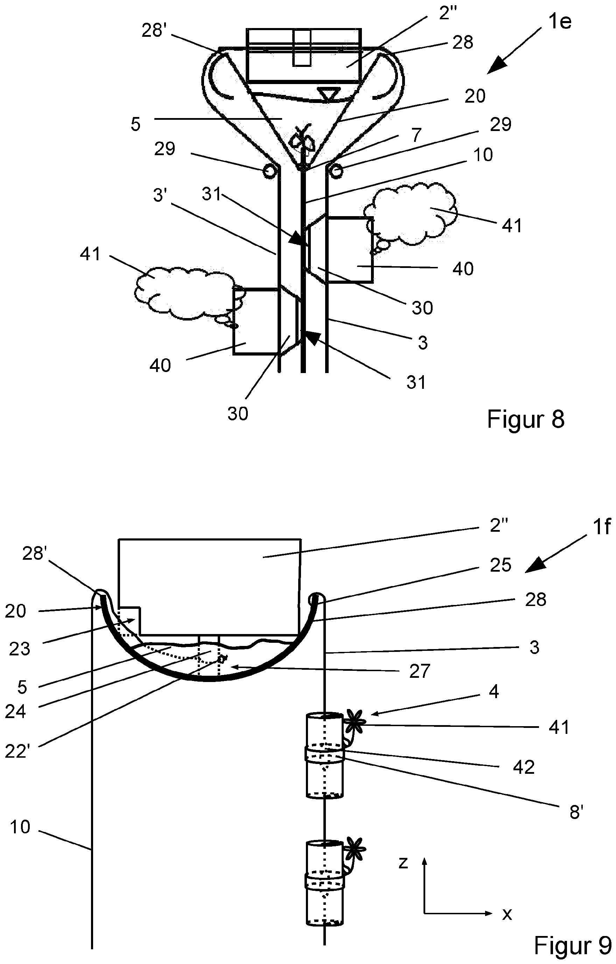

Der Saat- und/oder Pflanzenträger 3 ist in den in den Figuren 7 und 8 gezeigten Ausgestaltungsvarianten der Erfindung mit seinem ersten Ende an einem oberen Ende der Halterung 2" mittels eines Befestigungselementes 24' fixiert und über den Rinnenrand 28 hinweg geführt, sodass ein zweites Ende des Saat- und/oder Pflanzenträgers 3 freihängend ist.

Die Halterung 2" weist eine solche Höhe auf, dass ein oberer Bereich, das heißt, jener Bereich, an welchem der Saat- und/oder Pflanzenträger 3 befestigt ist, über die Versorgungsrinne 20 hinausragt. Dies bietet den Vorteil, dass der Saat- und/oder Pflanzenträger 3 nicht dauerhaft mit der Flüssigkeit 5 in Kontakt ist. Die Flüssigkeitsversorgung des Saat- und/oder Pflanzenträgers 3 wird in den in den Figuren 7 und 8 gezeigten Ausführungsbeispielen durch eine Kontaktierung des Versorgungsstranges 10 mit dem Saat- und/oder Pflanzenträger 3 erreicht.

In dem in Figur 7 veranschaulichten Ausführungsbeispiel sind die Saat- und/oder Pflanzstellen 4 durch thermogeformte oder tiefgezogene Bereiche 30 des Saat- und/oder Pflanzenträgers 3, also in Form der oben beschriebenen Hülsen 40 ausgebildet. Diese können in anderen Ausführungsformen der Erfindung aber auch oder zusätzlich dazu durch den Saat- und/oder Pflanzenträger 3 umschließende Hülsen 40' ausgebildet sein.

Figur 8 zeigt schematisch eine weitere mögliche Ausführungsform eines erfindungsgemäßen Saat- und/oder Pflanzsystems 1e. Wiederum bezeichnen in Figur 8 gleiche Bezugszeichen wie in den vorhergehenden Figuren gleiche oder ähnliche Komponenten, weshalb auch hier auch die vorhergehende Beschreibung zu diesen Komponenten verwiesen wird.

Das Saat und/oder Pflanzsystem 1e weist eine Versorgungsrinne 20 mit einer darin befindlichen Flüssigkeit 5 auf. In der Versorgungsrinne 20 ist eine Halterung 2" vorgesehen, an der zwei Saat- und/oder Pflanzenträger 3, 3' befestigt sind, die beidseitig der Versorgungsrinne 20 nach unten hängen. Durch seitlich eines unteren Abschnittes der Versorgungsrinne 20 vorgesehene Führungselemente 29 sind die beiden Saat- und/oder Pflanzenträger 3, 3' so zueinander geführt, dass sie nahe einer Öffnung 7 der Versorgungsrinne 20, die einem Auslass von Flüssigkeit 5 aus der Versorgungsrinne 20 dient, parallel zueinander, aber hinsichtlich der Ausrichtung der an den Saat- und/oder Pflanzenträgern 3, 3' vorgesehenen Hülsen 40 zueinander spiegelsymmetrisch verlaufen. Dabei sind die jeweils eine Öffnung aufweisenden Bodenbereiche 31 der thermogeformten oder tiefgezogenen Bereiche 30 der Hülsen 40 einander gegenüber vorgesehen, also zeigen in Richtung der Mitte des Saat- und/oder Pflanzsystems 1e.

An der Öffnung 7 hängt ein Versorgungsstrang 10, der über die Öffnung 7 mit der Flüssigkeit 5 versorgt wird. Die Saat- und/oder Pflanzenträger 3, 3' sind so eng beieinander angeordnet, dass die Öffnungen der thermogeformten oder tiefgezogenen Bereiche 30 der Hülsen 40 den Versorgungsstrang 10 kontaktieren und dadurch in den Hülsen 40 vorgesehene Substrate 6 durch den Versorgungsstrang 10 geleitete Flüssigkeit 5 aufnehmen und damit die Pflanzen 41 in den Hülsen 40 versorgen können.

Figur 9 zeigt schematisch ein weiteres Ausführungsbeispiel eines erfindungsgemäßen Saat- und/oder Pflanzsystems 1f mit einer in einer Versorgungsrinne 20 vorgesehenen Halterung 2" in einer Vorderansicht, wobei gleiche Bezugszeichen wie in den vorhergehenden Figuren gleiche Komponenten bezeichnen. Auf obige Ausführungen zu diesen Komponenten wird hiermit verweisen.

Im Ausführungsbeispiel von Figur 9 werden die Saat- und Pflanzstellen 4 aus den Saat- und/oder Pflanzenträger 3 umhüllenden Hülsen 40' gebildet, können jedoch auch durch Vertiefungen im Saat- und/oder Pflanzenträger 3 ausgebildet werden.

Im Ausführungsbeispiel von Figur 9 ist der Saat- und/oder Pflanzenträger 3 nicht an der Halterung 2" befestigt, sondern an der Versorgungsrinne 20. Hierfür kann die Versorgungsrinne 20 entweder eine Öffnung zum Fixieren des Saat- und/oder Pflanzenträgers 3 mittels einer daran vorgesehenen Verdickung, wie einem Knoten, aufweisen, oder aber einen Haken, eine Öse, eine Klemmvorrichtung oder ähnliches aufweisen. Beispielsweise kann, wie gezeigt, ein Befestigungselement 25 zum Befestigen des Saat- und/oder Pflanzenträgers 3 an einem oberen Bereich der Versorgungsrinne 20 angeordnet sein, wodurch unter anderem ein unerwünschtes Austreten der Flüssigkeit 5 aus der Versorgungsrinne 20 verhindert werden kann.

Darüber hinaus ist bei dem Beispiel aus Figur 9 ein Versorgungsstrang 10 an der Versorgungsrinne 20 vorgesehen. In der gezeigten Ausführungsform ist der Versorgungsstrang 10 an einer unterhalb des Wasserspiegels der Flüssigkeit 5 befindlichen Befestigung 25 in der Rinnensenke 27 angebracht, um ihn ausreichend mit der Flüssigkeit 5 versorgen zu können. Ebenso kann der Versorgungsstrang 10 als auch der Saat- und/oder Pflanzenträger 3 aber auch an jeder beliebigen anderen Stelle der Versorgungsrinne 20 befestigt werden.

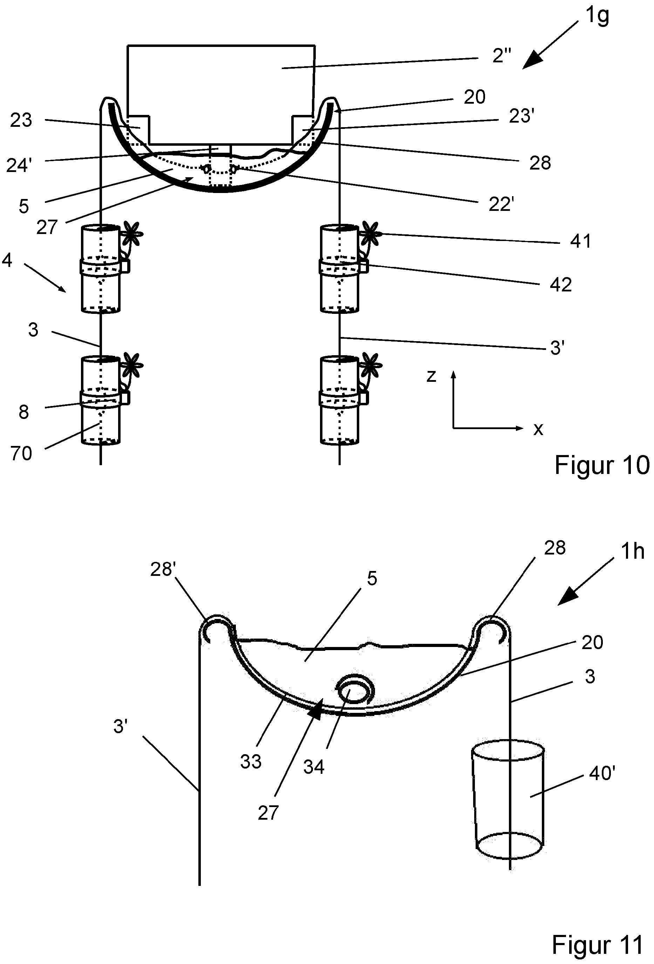

Figur 10 zeigt schematisch eine alternative Möglichkeit einer Ausbildung eines erfindungsgemäßen Saat- und/oder Versorgungssystems 1g mit einer in einer Versorgungsrinne 20 vorgesehenen Halterung 2" für zwei Saat- und/oder Pflanzenträger 3, 3' in einer Vorderansicht, wobei auch hier gleiche Bezugszeichen gleiche Komponenten wie in den vorhergehenden Figuren bezeichnen und auf die obigen Ausführungen zu diesen Komponenten verwiesen wird.

In der in Figur 10 veranschaulichten Ausführungsvariante ist kein separater Versorgungsstrang 10 vorhanden, vielmehr werden beide Saat- und/oder Pflanzenträger 3, 3' direkt mit der Flüssigkeit 5 versorgt. Hierfür können die Saat- und/oder Pflanzenträger 3, 3`, wie in dem in Figur 10 dargestellten Ausführungsbeispiel gezeigt, entweder an der Halterung 2" fixiert sein oder aber direkt an der Versorgungsrinne 20 angebracht sein. Neben der gezeigten Anordnung der Saat- und/oder Pflanzenträger 3, 3' kann auch die Anzahl der Saat- und/oder Pflanzenträger 3, 3' sowie deren Ausgestaltungsform beliebig variiert werden.

Bei der Anordnung und Ausgestaltung des Saat- und/oder Pflanzsystems 1g ist lediglich von Bedeutung, dass die Saat- und/oder Pflanzstellen 4 und somit die Samen 42 und/oder Pflanzen 41 ausreichend mit der Flüssigkeit 5 versorgt werden.

Figur 11 zeigt schematisch einen Teil einer weiteren Ausbildung eines erfindungsgemä-βen Saat- und/oder Versorgungssystems 1h mit zwei über eine Versorgungsrinne 20 mit Flüssigkeit 5 versorgten Saat- und/oder Pflanzenträgern 3, 3', die über einen durchgängig durch die Versorgungsrinne 20 verlaufenden Strang 33 miteinander verbunden sind, in einer Vorderansicht.

Der Strang 33 wird durch ein in der Versorgungsrinne 20 befindliches, nicht in der Flüssigkeit 5 aufschwimmendes Element 34, wie beispielsweise einen nach unten gedrückten Stab, in einer Rinnensenke 27 der Versorgungsrinne 20 gehalten, sodass der Strang 33 und über diesen die Saat- und/oder Pflanzenträger 3, 3' mit der in der Versorgungsrinne 20 befindlichen Flüssigkeit 5 versorgt werden können.

## Patentansprüche

1. Saat- und/oder Pflanzsystem (1, 1a, 1b, 1d, 1e), das wenigstens einen an einer Halterung (2, 2', 2") hängend befestigten strangförmigen Saat- und/oder Pflanzenträger (3, 3') aufweist, wobei der Saat- und/oder Pflanzenträger (3, 3') mehrere voneinander, in seiner Längsausdehnung (z) beabstandete Saat- und/oder Pflanzstellen (4) mit Samen (42) und/oder wenigstens einer Pflanze (41) aufweist, wobei der Samen (42) und/oder die wenigstens eine Pflanze (41) über wenigstens ein Versorgungsrohr oder wenigstens eine Versorgungsrinne (20) mit einer Flüssigkeit (5) versorgt wird/werden, **dadurch gekennzeichnet, dass** an den Saat- und/oder Pflanzstellen (4) jeweils eine Hülse (40) vorgesehen ist, von der ein Substrat (6, 6') mit dem Samen (42) und/oder der Pflanze (41) aufgenommen oder aufnehmbar ist, wobei die Hülse (40) aus dem Saat- und/oder Pflanzenträger (3, 3') ausgebildet ist, quer zu der Längsausdehnung (z) des Saat- und/oder Pflanzenträgers (3, 3') ausgerichtet ist und ein thermogeformter oder tiefgezogener Bereich (30) des Saat- und/oder Pflanzenträgers (3, 3') die Hülse (40) ausbildet, wobei ein Bodenbereich (31) des thermogeformten oder tiefgezogenen Bereiches (30) wenigstens eine Öffnung aufweist.

2. Saat- und/oder Pflanzsystem nach Anspruch 1, **dadurch gekennzeichnet, dass** der Saat- und/oder Pflanzenträger (3, 3') aus extrudiertem Kunststoff und/oder wenigstens einer Blechbahn und/oder wenigstens einem Textilband oder aus einem Verbund aus wenigstens zwei dieser Materialien ausgebildet ist.

3. Saat- und/oder Pflanzsystem (1, 1c, 1f, 1g, 1h), das wenigstens einen an einer Halterung (2, 2', 2") hängend befestigten strangförmigen Saat- und/oder Pflanzenträger (3, 3') aufweist, wobei der Saat- und/oder Pflanzenträger (3, 3') mehrere voneinander, in seiner Längsausdehnung (z) beabstandete Saat- und/oder Pflanzstellen (4) mit Samen (42) und/oder wenigstens einer Pflanze (41) aufweist, wobei der Samen (42) und/oder die wenigstens eine Pflanze (41) über wenigstens ein Versorgungsrohr oder wenigstens eine Versorgungsrinne (20) mit einer Flüssigkeit (5) versorgt wird/werden, **dadurch gekennzeichnet, dass** an den Saat- und/oder Pflanzstellen (4) jeweils eine Hülse (40`) vorgesehen ist, von der ein Substrat (6, 6') mit dem Samen (42) und/oder der Pflanze (41) aufgenommen oder aufnehmbar ist und/oder die zumindest teilweise ein Substrat (6') für den Samen (42) und/oder die Pflanze (41) ausbildet, wobei die Hülse (40') um den Saat- und/oder Pflanzenträger (3, 3') ausgebildet ist, wobei die Hülse (40`) an dem Saat- und/oder Pflanzenträger (3, 3') klemmt und/oder an dem Saat- und/oder Pflanzenträger (3, 3') mit wenigstens einem Befestigungselement (8) fixiert ist, wobei das Befestigungselement (8) eine Schelle, ein C-Ring, ein Faden, ein Seil, ein Band oder ein Tuch ist.

4. Saat- und/oder Pflanzenträger nach einem der vorhergehenden Ansprüche, **dadurch gekennzeichnet, dass** der Saat- und/oder Pflanzenträger (3, 3') bandförmig oder in Form einer Kordel, eines Seils, einer Strickleiter oder eines Schlauches ausgebildet ist.

5. Saat- und/oder Pflanzenträger nach Anspruch 3, **dadurch gekennzeichnet, dass** das Befestigungselement (8) Samen (42) aufweist.

6. Saat- und/oder Pflanzsystem nach einem der vorhergehenden Ansprüche, **dadurch gekennzeichnet, dass** parallel zu dem Saat- und/oder Pflanzenträger (3, 3') ein die Flüssigkeit (5) leitender Versorgungsstrang (10) an dem Versorgungsrohr oder der Versorgungsrinne (20) befestigt ist, wobei der Versorgungsstrang (10) in flüssigkeitsleitendem Kontakt mit dem Saat- und/oder Pflanzenträger (3, 3') ist.

7. Saat- und/oder Pflanzsystem nach Anspruch 6, **dadurch gekennzeichnet, dass** das Saat- und/oder Pflanzsystem (1, 1a, 1b, 1c, 1d, 1e, 1f, 1g, 1h) einen Arm, einen Schwenkarm (9), wenigstens eine Führung (29), einen Hebel oder eine Wippe zum Andrücken des wenigstens einen Versorgungsstranges (10) an den wenigstens einen Saat- und/oder Pflanzenträger (3, 3') oder umgekehrt aufweist.

8. Saat- und/oder Pflanzsystem nach einem der vorhergehenden Ansprüche, **dadurch gekennzeichnet, dass** durch den Saat- und/oder Pflanzenträger (3, 3') ein die Flüssigkeit (5) leitender Versorgungsstrang (10) zumindest teilweise hindurchgeführt ist.

9. Saat- und/oder Pflanzsystem nach einem der vorhergehenden Ansprüche, **dadurch gekennzeichnet, dass** an einer Flüssigkeitsabgabeöffnung des Versorgungsrohres oder der Versorgungsrinne (20), einem die Flüssigkeit (5) leitenden Versorgungsstrang (10) oder einer anderen Stelle der die Flüssigkeit (5) leitenden Komponenten des Saat- und/oder Pflanzsystems (1, 1a, 1b, 1c, 1d, 1e, 1f, 1g, 1h) wenigstens ein Ventil vorgesehen ist, mit dem die Flüssigkeitszufuhr zum Versorgungsstrang (10) und/oder vom Versorgungsstrang (10) zum Saat- und/oder Pflanzenträger (3, 3') steuerbar oder regulierbar ist.

10. Saat- und/oder Pflanzsystem nach einem der vorhergehenden Ansprüche, **dadurch gekennzeichnet, dass** der Saat- und/oder Pflanzenträger (3, 3') mittels einer Gleitlagerung (21) an oder in der Halterung (2, 2', 2") gelagert ist,
wobei dann, wenn mehrere Saat- und/oder Pflanzenträger (3, 3') mittels der Gleitlagerung (21) an oder in der Halterung (2, 2', 2") gelagert sind, wenigstens eine Anzahl dieser Saat- und/oder Pflanzenträger (3, 3') miteinander mittels einer permanenten oder lösbaren Verbindung für eine gemeinsame Verschiebbarkeit dieser Saat- und/oder Pflanzenträger (3, 3') gekoppelt sind.

11. Saat- und/oder Pflanzsystem nach einem der vorhergehenden Ansprüche, **dadurch gekennzeichnet, dass** das Versorgungsrohr oder die Versorgungsrinne (20) die Halterung (2, 2') des Saat- und/oder Pflanzenträgers (3, 3') ausbildet.

12. Saat- und/oder Pflanzsystem nach einem der Ansprüche 6 bis 8, **dadurch gekennzeichnet, dass** der Versorgungsstrang (10) durch eine Öffnung (7, 7') in einem Boden (26) des Versorgungsrohres oder der Versorgungsrinne (20) führt und von dem Boden (26) nach unten hängt.

13. Saat- und/oder Pflanzsystem nach Anspruch 12, **dadurch gekennzeichnet, dass** an der Öffnung (7, 7') wenigstens ein Filter, wenigstens ein Sieb, wenigstens ein Ventil und/oder wenigstens eine Düse vorgesehen ist und/oder in der Öffnung (7, 7') wenigstens ein Röhrchen oder Schlauch vorgesehen ist.

14. Saat- und/oder Pflanzsystem nach einem der Ansprüche 6 bis 9, 12 oder 13, **dadurch gekennzeichnet, dass** der Versorgungsstrang (10) in einer Rinnensenke (27) der Versorgungsrinne (20) fixiert ist und über einen Rinnenrand (28) führt.

15. Saat- und/oder Pflanzsystem nach einem der Ansprüche 6 bis 9 oder 11 bis 13, **dadurch gekennzeichnet, dass** der Versorgungsstrang (10) an der gleichen Versorgungsrinne (20) wie der Saat- und/oder Pflanzenträger (3, 3') fixiert ist.

16. Saat- und/oder Pflanzsystem nach einem der vorhergehenden Ansprüche, **dadurch gekennzeichnet, dass** in die Versorgungsrinne (20) wenigstens ein Versorgungsstrang (10) ragt und an oder in der Versorgungsrinne (20) befestigt ist, und an der Versorgungsrinne (20) wenigstens zwei Saat- und/oder Pflanzenträger (3, 3') befestigt und so zu dem Versorgungsstrang (10) geführt sind, dass die Saat- und/oder Pflanzstellen (4) der Saat- und/oder Pflanzenträger (3, 3') in flüssigkeitsleitendem Kontakt mit dem Versorgungsstrang (10) sind.

## Claims

1. Seed and/or plant system (1, 1a, 1b, 1d, 1e), which has at least one strand-shaped seed and/or plant carrier (3, 3') which is suspended from a holder (2, 2', 2"), the seed and/or plant carrier (3, 3') having a plurality of seed and/or plant locations (4), spaced apart from one another in the longitudinal extension (z) of said carrier, with seeds (42) and/or at least one plant (41), wherein the seed (42) and/or the at least one plant (41) is supplied with a liquid (5) via at least one supply tube or at least one supply channel (20), **characterized in that** a sleeve (40) is provided at each of the seed and/or plant locations (4), by means of which sleeve a substrate (6, 6') with the seed (42) and/or the plant (41) is or can be received, the sleeve (40) being formed from the seed and/or plant carrier (3, 3') and being transversely aligned to the longitudinal extension (z) of the seed and/or plant carrier (3, 3'), and a thermoformed or deep-drawn area (30) of the seed and/or plant carrier (3, 3') forming the sleeve (40), wherein a base area (31) of the thermoformed or deep-drawn area (30) comprises at least one opening.

2. Seed and/or plant system according to claim 1, **characterized in that** the seed and/or plant carrier (3, 3') is formed from extruded plastics material and/or at least one metal track and/or at least one textile strap or from a composite of at least two of these materials.

3. Seed and/or plant system (1, 1c, 1f, 1g, 1h), which has at least one strand-shaped seed and/or plant carrier (3, 3') which is suspended from a holder (2, 2', 2"), the seed and/or plant carrier (3, 3') having a plurality of seed and/or plant locations (4), spaced apart from one another in the longitudinal extension (z) of said carrier, with seeds (42) and/or at least one plant (41), wherein the seed (42) and/or the at least one plant (41) is supplied with a liquid (5) via at least one supply tube or at least one supply channel (20), **characterized in that** a sleeve (40') is provided at each of the seed and/or plant locations (4), by means of which sleeve a substrate (6, 6') with the seed (42) and/or the plant (41) is or can be received and/or which sleeve at least partially forms a substrate (6') for the seed (42) and/or the plant (41), the sleeve (40') being formed around the seed and/or plant carrier (3, 3'), the sleeve (40') being clamped to the seed and/or plant carrier (3, 3') and/or being fixed to the seed and/or plant carrier (3, 3') with at least one fastening element (8), the fixing element (8) being a bracket, a C-ring, a thread, a cable, a strap or a cloth.

4. Seed and/or plant carrier according to any of the preceding claims, **characterized in that** the seed and/or plant carrier (3, 3') is in the form of a strap or in the form of a cord, a cable, a rope ladder or a hose.

5. Seed and/or plant carrier according to claim 3, **characterized in that** the fixing element (8) contains seeds (42).

6. Seed and/or plant system according to any of the preceding claims, **characterized in that** a supply strand (10) conducting the liquid (5) is fixed to the supply tube or the supply channel (20) parallel to the seed and/or plant carrier (3, 3'), wherein the supply strand (10) is in liquid-conducting contact with the seed and/or plant carrier (3, 3').

7. Seed and/or plant system according to claim 6, **characterized in that** the seed and/or plant system (1, 1a, 1b, 1c, 1d, 1e, 1f, 1g, 1h) has an arm, a swivel arm (9), at least one guidance (29), a lever or a rocker for pressing the at least one supply strand (10) onto the at least one seed and/or plant carrier (3, 3') or vice versa.

8. Seed and/or plant system according to any of the preceding claims, **characterized in that** a supply strand (10) conducting the liquid (5) is at least partially led through the seed and/or plant carrier (3, 3').

9. Seed and/or plant system according to any of the preceding claims, **characterized in that** at least one valve is provided on a liquid discharge opening of the supply tube or of the supply channel (20), on a supply strand (10) conducting the liquid (5) or on another location of the components of the seed and/or plant system (1, 1a, 1b, 1c, 1d, 1e, 1f, 1 g, 1h) conducting the liquid (5), with which valve the liquid supply to the supply strand (10) and/or from the supply strand (10) to the seed and/or plant carrier (3, 3') can be controlled or regulated.

10. Seed and/or plant system according to any of the preceding claims, **characterized in that** the seed and/or plant carrier (3, 3') is mounted on or in the holder (2, 2', 2") by means of a slide bearing (21), where, if a plurality of seed and/or plant carriers (3, 3') are mounted on or in the holder (2, 2', 2") by means of the slide bearing (21), at least a number of these seed and/or plant carriers (3, 3') is coupled to one another by means of a permanent or releasable connection for a common displaceability of said seed and/or plant carriers (3, 3').

11. Seed and/or plant system according to any of the preceding claims, **characterized in that** the supply tube or the supply channel (20) forms the holder (2, 2') of the seed and/or plant carrier (3, 3').

12. Seed and/or plant system according to any of claims 6 to 8, **characterized in that** the supply strand (10) leads through an opening (7, 7') in a base (26) of the supply tube or supply channel (20) and hangs down from the base (26).

13. Seed and/or plant system according to claim 12, **characterized in that** at least one filter, at least one sieve, at least one valve and/or at least one nozzle is provided at the opening (7, 7') and/or at least one tube or hose is provided in the opening (7, 7').

14. Seed and/or plant system according to any of claims 6 to 9, 12 or 13, **characterized in that** the supply strand (10) is fixed in a channel sink (27) of the supply channel (20) and leads over a channel edge (28).

15. Seed and/or plant system according to any of claims 6 to 9 or 11 to 13, **characterized in that** the supply strand (10) is fixed to the same supply channel (20) such as the seed and/or plant carrier (3, 3').

16. Seed and/or plant system according to any of the preceding claims, **characterized in that** at least one supply strand (10) protrudes into the supply channel (20) and is fastened to or in the supply channel (20), and at least two seed and/or plant carriers (3, 3') are fastened to the supply channel (20) and are guided to the supply strand (10) such that the seed and/or plant locations (4) of the seed and/or plant carriers (3, 3') are in liquid-conducting contact with the supply line (10).

## Revendications

1. Système de semis et/ou de plantation (1, 1a, 1b, 1d, 1e) qui présente au moins un support de semis et/ou de plantation (3, 3') en forme de cordon fixé de manière suspendue à un dispositif de maintien (2, 2', 2"), le support de semis et/ou de plantation (3, 3') présentant plusieurs emplacements de semis et/ou de plantation (4) espacés les uns des autres dans son étendue longitudinale (z) et comportant des semences (42) et/ou au moins une plante (41), les semences (42) et/ou l'au moins une plante (41) étant alimentées en liquide (5) par l'intermédiaire d'au moins un tube d'alimentation ou d'au moins un canal d'alimentation (20), **caractérisé en ce que** respectivement un manchon (40), dans lequel un substrat (6, 6') est reçu ou peut être reçu avec les semences (42) et/ou la plante (41), est prévu aux emplacements de semis et/ou de plantation (4), le manchon (40) étant formé à partir du support de semis et/ou de plantation (3, 3') et orienté transversalement à l'étendue longitudinale (z) du support de semis et/ou de plantation (3, 3') et une zone thermoformée ou emboutie (30) du support de semis et/ou de plantation (3, 3') formant le manchon (40), une zone de fond (31) de la zone thermoformée ou emboutie (30) présentant au moins une ouverture.

2. Système de semis et/ou de plantation selon la revendication 1, **caractérisé en ce que** le support de semis et/ou de plantation (3, 3') est formé à partir d'un matériau plastique extrudé et/ou d'au moins une feuille de tôle et/ou d'au moins une bande textile ou à partir d'un composite constitué d'au moins deux desdits matériaux.

3. Système de semis et/ou de plantation (1, 1c, 1f, 1g, 1h) qui présente au moins un support de semis et/ou de plantation (3, 3') en forme de cordon fixé de manière suspendue à un dispositif de maintien (2, 2', 2"), le support de semis et/ou de plantation (3, 3') présentant plusieurs emplacements de semis et/ou de plantation (4) espacés les uns des autres dans son étendue longitudinale (z) et comportant des semences (42) et/ou au moins une plante (41), les semences (42) et/ou l'au moins une plante (41) étant alimentées en liquide (5) par l'intermédiaire d'au moins un tube d'alimentation ou d'au moins un canal d'alimentation (20), **caractérisé en ce que** respectivement un manchon (40'), dans lequel un substrat (6, 6') est reçu ou peut être reçu avec les semences (42) et/ou la plante (41) et/ou lequel forme au moins partiellement un substrat (6') pour les semences (42) et/ou la plante (41), est prévu aux emplacements de semis et/ou de plantation (4), le manchon (40') étant formé autour du support de semis et/ou de plantation (3, 3'), le manchon (40') étant serré au support de semis et/ou de plantation (3, 3') et/ou étant fixé au support de semis et/ou de plantation (3, 3') avec au moins un élément de fixation (8), l'élément de fixation (8) étant un collier de serrage, un anneau en C, un fil, un câble, une bande ou une étoffe.

4. Système de semis et/ou de plantation selon l'une des revendications précédentes, **caractérisé en ce que** le support de semis et/ou de plantation (3, 3') est en forme de bande ou sous la forme d'une corde, d'un câble, d'une échelle de corde ou d'un tuyau.

5. Système de semis et/ou de plantation selon la revendication 3, **caractérisé en ce que** l'élément de fixation (8) présente des semences (42).

6. Système de semis et/ou de plantation selon l'une des revendications précédentes, **caractérisé en ce qu'**un cordon d'alimentation (10) conduisant le liquide (5) est fixé au tube d'alimentation ou au canal d'alimentation (20) parallèlement au support de semis et/ou de plantation (3, 3'), le cordon d'alimentation (10) étant en contact conducteur de liquide avec le support de semis et/ou de plantation (3, 3').

7. Système de semis et/ou de plantation selon la revendication 6, **caractérisé en ce que** le système de semis et/ou de plantation (1, 1a, 1b, 1c, 1d, 1e, 1f, 1g, 1h) présente un bras, un bras pivotant (9), au moins un guide (29), un levier ou une bascule pour le pressage de l'au moins un cordon d'alimentation (10) sur l'au moins un support de semis et/ou de plantation (3, 3') ou vice versa.

8. Système de semis et/ou de plantation selon l'une des revendications précédentes, **caractérisé en ce qu'**un cordon d'alimentation (10) conduisant le liquide (5) est au moins partiellement guidé à travers le support de semis et/ou de plantation (3, 3').

9. Système de semis et/ou de plantation selon l'une des revendications précédentes, **caractérisé en ce qu'**au moins une valve est prévue au niveau d'une ouverture de distribution de liquide du tube d'alimentation ou du canal d'alimentation (20), d'un cordon d'alimentation (10) conduisant le liquide (5) ou d'un autre emplacement des composants du système de semis et/ou de plantation (1, 1a, 1b, 1c, 1d, 1e, 1f, 1g, 1h) conduisant le liquide (5), avec laquelle soupape l'apport en liquide au cordon d'alimentation (10) et/ou du cordon d'alimentation (10) au support de semis et/ou de plantation (3, 3') peut être commandé ou régulé.

10. Système de semis et/ou de plantation selon l'une des revendications précédentes, **caractérisé en ce que** le support de semis et/ou de plantation (3, 3') est monté sur ou dans le dispositif de maintien (2, 2', 2") au moyen d'un palier lisse (21), lorsque plusieurs supports de semis et/ou de plantation (3, 3') sont montés sur ou dans le dispositif de maintien (2, 2', 2") au moyen du palier lisse (21), au moins un certain nombre desdits supports de semis et/ou de plantation (3, 3') étant couplés les uns aux autres au moyen d'une liaison permanente ou amovible pour un déplacement commun desdits supports de semis et/ou de plantation (3, 3').

11. Système de semis et/ou de plantation selon l'une des revendications précédentes, **caractérisé en ce que** le tube d'alimentation ou le canal d'alimentation (20) forme le dispositif de maintien (2, 2') du support de semis et/ou de plantation (3, 3').

12. Système de semis et/ou de plantation selon l'une des revendications 6 à 8, **caractérisé en ce que** le cordon d'alimentation (10) passe à travers une ouverture (7, 7') dans un fond (26) du tube d'alimentation ou du canal d'alimentation (20) et est suspendu au fond (26) vers le bas.

13. Système de semis et/ou de plantation selon la revendication 12, **caractérisé en ce qu'**au moins un filtre, au moins un tamis, au moins une valve et/ou au moins une buse sont prévus au niveau de l'ouverture (7, 7') et/ou au moins un petit tube ou un tuyau est prévu dans l'ouverture (7, 7').

14. Système de semis et/ou de plantation selon l'une des revendications 6 à 9, 12 ou 13, **caractérisé en ce que** le cordon d'alimentation (10) est fixé dans un creux de canal (27) du canal d'alimentation (20) et passe sur un bord de canal (28).

15. Système de semis et/ou de plantation selon l'une des revendications 6 à 9 ou 11 à 13, **caractérisé en ce que** le cordon d'alimentation (10) est fixé sur le même canal d'alimentation (20) que le support de semis et/ou de plantation (3, 3').

16. Système de semis et/ou de plantation selon l'une des revendications précédentes, **caractérisé en ce qu'**au moins un cordon d'alimentation (10) fait saillie dans le canal d'alimentation (20) et est fixé sur ou dans le canal d'alimentation (20), et au moins deux supports de semis et/ou de plantation (3, 3') sont fixés sur le canal d'alimentation (20) et sont guidés vers le cordon d'alimentation (10) de sorte que les emplacements de semis et/ou de plantation (4) des supports de semis et/ou de plantation (3, 3') sont en contact conducteur de liquide avec le cordon d'alimentation (10).
